(19) **Europäisches Patentamt / European Patent Office / Office européen des brevets**

(11) **EP 2 793 304 A1**

(12) **EUROPEAN PATENT APPLICATION**
published in accordance with Art. 153(4) EPC

(43) Date of publication:
**22.10.2014 Bulletin 2014/43**

(51) Int Cl.:
***H01M 8/04*** (2006.01)

(21) Application number: **11858466.3**

(22) Date of filing: **12.12.2011**

(86) International application number:
**PCT/JP2011/006917**

(87) International publication number:
**WO 2013/088463 (20.06.2013 Gazette 2013/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **TOYOTA JIDOSHA KABUSHIKI KAISHA**
**Toyota-shi, Aichi-ken, 471-8571 (JP)**

(72) Inventors:
• **OGAWA, Tomohiro**
  **Aichi 4718571 (JP)**

• **ARAKI, Yasushi**
  **Aichi 4718571 (JP)**
• **HAMADA, Hitoshi**
  **Aichi 4718571 (JP)**
• **TAKEUCHI, Hiroaki**
  **Aichi 4718571 (JP)**

(74) Representative: **Intès, Didier Gérard André et al**
  **Cabinet Beau de Loménie**
  **158, rue de l'Université**
  **75340 Paris Cedex 07 (FR)**

(54) **METHOD FOR ESTIMATING AMOUNT OF LIQUID WATER INSIDE FUEL CELL, METHOD FOR ESTIMATING AMOUNT OF LIQUID WATER DISCHARGED FROM FUEL CELL, DEVICE FOR ESTIMATING AMOUNT OF LIQUID WATER INSIDE FUEL CELL, AND FUEL CELL SYSTEM**

(57) The procedure of the invention successively obtains an estimated value of amount of liquid water in a fuel cell during operation in each specified period by the following steps (a) to (d), thereby improving the detection accuracy of the water condition inside the fuel cell. The step (a) obtains a previous estimated value. The step (b) obtains a drainage rate that represents an amount of liquid water discharged from the fuel cell per unit time, based on the previous estimated value and a value representing a current flow rate of a reactive gas in the fuel cell. The step (c) multiplies the drainage rate by a period of obtaining the estimated value, so as to calculate an amount of liquid water discharged from the fuel cell for a specified duration. The step (d) determines a current estimated value, based on the amount of liquid water discharged from the fuel cell for the specified duration.

Fig.4

```
                    START
                      │
        READ END-OF-OPERATION          — S10
            WATER CONTENT
                      │
                      ▼◄──────────────────┐
          OBTAIN OPERATING                │
        CONDITION INFORMATION      — S20  │
        ·AMOUNT OF POWER GENERATION       │
        ·SUPPLY GAS INFORMATION           │
        ·OFF-GAS INFORMATION              │
                      │                   │
          OBTAIN PREVIOUS VALUE    — S30  │
                      │                   │
          OBTAIN AMOUNT OF         — S40  │
        DISCHARGED LIQUID WATER          │
                      │                   │
          DETERMINE ESTIMATED      — S50  │
          VALUE OF WATER CONTENT          │
                      │                   │
                   S60│                   │
              ◄OPERATION IS STOPPED?► NO ─┘
                      │ YES
        STORE END-OF-OPERATION     — S70
            WATER CONTENT
                      │
                    END
```

**Description**

**TECHNICAL FIELD**

The present invention relates to a fuel cell.

**BACKGROUND ART**

A polymer electrolyte fuel cell (hereinafter referred to as "fuel cell") has membrane electrode assemblies, each obtained by placing electrodes on respective surfaces of an electrolyte membrane, as power generation elements. The electrolyte membrane has good proton conductivity in the wet state. The fuel cell is thus preferably configured to adequately keep the amount of water inside the fuel cell at such a level that maintains the proton conductivity of the electrolyte membrane. An extremely large amount of water existing inside the fuel cell may, however, cause a problem that the flow path of a reactive gas inside the fuel cell is blocked by the presence of water. It is accordingly desired to adequately discharge the water existing inside the fuel cell.

Various techniques have been proposed to detect the water condition inside the fuel cell and control the water condition inside the fuel cell (e.g., PTL1). The detection accuracy of the water content inside the fuel cell by the prior art technique is, however, not sufficiently high to adequately control the water condition inside the fuel cell.

**CITATION LIST**

**PATENT LITERATURES**

PTL 1: JP 2007-052936A
PTL 2: JP 2010-257606A

**SUMMARY**

**TECHNICAL PROBLEM**

The object of the invention is to improve the detection accuracy of the water condition inside a fuel cell.

**SOLUTION TO PROBLEM**

In order to achieve at least part of the foregoing, the present invention provides various aspects and embodiments described below.

FIRST ASPECT:

According to a first aspect, there is provided a method of successively obtaining an estimated value of amount of liquid water in a fuel cell during operation, comprising the steps of:

(a) obtaining a previous estimated value;
(b) obtaining a factor, based on the previous estimated value and a value representing a current flow rate of a reactive gas supplied to the fuel cell;
(c) multiplying a period of obtaining the estimated value by the factor, so as to calculate a value contributing to a variation in amount of liquid water in the fuel cell; and
(d) determining a current estimated value, based on the value calculated in the step (c).

The method of this aspect determines the current estimated value of water content of the fuel cell by taking into account the fact that a variation in water content of the fuel cell from the previous period changes depending on the previous amount of liquid water inside the fuel cell (hereinafter referred to as "water content of the fuel cell"). This enables detection of the water condition in the fuel cell with the higher accuracy.

SECOND ASPECT:

According to a second aspect, there is provided the method according to the first aspect, wherein the factor is a drainage rate that represents an amount of liquid water discharged from the fuel cell per unit time, and the value contributing to the variation in amount of liquid water in the fuel cell is an estimated drainage amount that represents an amount of liquid water discharged from the fuel cell for a duration between a previous period and a present period.

The method of this aspect estimates the amount of liquid water discharged from the fuel cell in the present period, based on the previous estimated value and the current flow rate of the reactive gas supplied to the fuel cell, thereby improving the estimation accuracy of the water content of the fuel cell.

THIRD ASPECT:

According to a third aspect, there is provided the method according to the second aspect, wherein the step (b) calculates the drainage rate from the previous estimated value and the value representing the current flow rate of the reactive gas supplied to the fuel cell, based on a specified relationship between amount of liquid water in the fuel cell and flow rate of the reactive gas supplied to the fuel cell, wherein the specified relationship is a time change in amount of liquid water in the fuel cell along a downward-convex curve by a different change rate with respect to each flow rate of the reactive gas, and the time change causes the amount of liquid water in the fuel cell to converge to a drainage limit value, which is given as a different specified value with respect to each flow rate of the reactive gas.

The method of this aspect enables the amount of liquid water discharged from the fuel cell to be determined with the higher accuracy, based on the experiment-based specified relationship between the water content of the fuel cell and the flow rate of the reactive gas supplied to the fuel cell. This improves the estimation accuracy of the water content of the fuel cell.

FOURTH ASPECT:

According to a fourth aspect, there is provided the method according to either one of the second aspect and the third aspect, wherein the step (d) determines the current estimated value based on the estimated drainage amount, an amount of water vapor flowing into the fuel cell, an amount of water vapor flowing out of the fuel cell and an amount of water produced by power generation in the fuel cell.

The method of this aspect determines the estimated value of water content that reflects a change in water condition depending on the operating conditions of the fuel cell. This enables estimation of the water content of the fuel cell with the higher accuracy.

FIFTH ASPECT:

According to a fifth aspect, there is provided the method according to the fourth aspect, wherein the fuel cell includes an electrolyte membrane placed between a first electrode and a second electrode, and the step (d) determines the current estimated value, additionally based on an amount of moving water between the first electrode and the second electrode, wherein the amount of moving water between the first electrode and the second electrode is determined depending on a value associated with an amount of liquid water contained in the electrolyte membrane.

The method of this aspect determines the estimated value of water content that reflects the amount of water moving between the first electrode and the second electrode in the fuel cell. This enables estimation of the water content of the fuel cell with the higher accuracy.

SIXTH ASPECT:

According to a sixth aspect, there is provided the method according to any one of above aspects, further comprising the steps of:

(e) detecting that inside of the fuel cell is in a specified dry condition; and
(f) when detecting that inside of the fuel cell is in the specified dry condition, discarding the current estimated value determined in the step (d) and setting a predetermined value to the current estimated value.

The method of this aspect corrects the estimated value of water content of the fuel cell, based on the state that inside of the fuel cell is in the dry condition. This improves the estimation accuracy of the water content of the fuel cell.

SEVENTH ASPECT:

According to a seventh aspect, there is provided the method according to any one of the second aspect to the sixth aspect, wherein the step (c) further comprises the step of:

(c1) when detecting presence of a time period when a flow rate of the reactive gas is temporarily lowered below a specified level, between the previous period and the present period, correcting the estimated drainage amount according to length of the detected time period.

The method of this aspect estimated the water content of the fuel cell by taking into account a change in amount of liquid water discharged from the fuel cell, accompanied with a specified change in amount of reactive gas supplied to the fuel cell, thereby improving the estimation accuracy.

EIGHTH ASPECT:

According to an eighth aspect, there is provided the method according to any one of the third aspect to the seventh aspect, further comprising the steps of:

(A) obtaining a reference value of amount of liquid water in the fuel cell; and
(B) obtaining a correction value depending on a difference between the previous estimated value and the reference value obtained in the step (A), and correcting the specified relationship used in the step (b) with the obtained correction value.

The method of this aspect estimates the amount of liquid water in the fuel cell by feeding back the difference between the estimated value and the reference value, thus improving the estimation accuracy.

NINTH ASPECT:

According to a ninth aspect, there is provided the method according to the eighth aspect, wherein the steps (A) and (B) are performed at a sub-zero start of the fuel cell, and
the step (A) obtains the reference value, based on a state change depending on an amount of water contained in the fuel cell at the start of the fuel cell.
At the sub-zero start of the fuel cell, a specific state change of the fuel cell can be detected based on the amount of water contained in the fuel cell. The method of this aspect readily obtains the reference value of water content, based on the specific state change, thus improving the estimation accuracy of the water content of the fuel cell.

TENTH ASPECT:

According to a tenth aspect, there is provided the method according to the ninth aspect, wherein the step (A) obtains the reference value, based on a maximum value of electric current detected during continuation of output of a specified voltage from the fuel cell since the start of the fuel cell.
The method of this aspect readily obtains the amount of water contained in the fuel cell as the reference value, based on a change in electric current at the sub-zero start of the fuel cell.

ELEVENTH ASPECT:

According to an eleventh aspect, there is provided the method according to the ninth aspect, wherein the step (A) obtains the reference value, based on a time elapsed before operating temperature of the fuel cell has a specified temperature change since the start of the fuel cell.
The method of this aspect readily obtains the amount of water contained in the fuel cell as the reference value, based on a change in temperature at the sub-zero start of the fuel cell.

TWELFTH ASPECT:

According to a twelfth aspect, there is provided the method according to any one of the ninth aspect to the eleventh aspect, wherein
the step (B) specifies the drainage limit value obtained with respect to a previous flow rate of the reactive gas during a previous operation period of the fuel cell, as a basis for correction, and corrects the overall specified relationship with the correction value.

The method of this aspect corrects the specified relationship on the basis of the drainage limit value, which is the element characterizing the specified relationship used to obtain the drainage rate. This provides the more adequate drainage rate and thereby improves the estimation accuracy of the amount of liquid water inside the fuel cell.

THIRTEENTH ASPECT:

According to a thirteenth aspect, there is provided the method according to any one of the eighth aspect to the twelfth aspect, wherein
the step (B) sets the correction value to be smaller than the difference between the previous estimated value and the reference value, so as to gradually eliminate an error of the estimated value by repeating correction a plurality of times.

Even when the reference value has a variation, the method of this aspect relieves the influence of the variation.

FOURTEENTH ASPECT:

According to a fourteenth aspect, there is provided a method of obtaining an estimated value of amount of liquid water discharged from a fuel cell during operation for a specified duration, comprising the steps of:

(a) obtaining a last value that indicates an amount of liquid water existing in the fuel cell in a period immediately before the specified duration;
(b) obtaining a factor, based on the last value and a value representing a current flow rate of a reactive gas in the fuel cell; and
(c) multiplying the specified duration by the factor, so as to determine the estimated value.

The method of this aspect enables the amount of liquid water discharged from the fuel cell to be estimated with high accuracy.

FIFTEENTH ASPECT:

According to a fifteenth aspect, there is provided an estimation apparatus of successively obtaining an estimated value of amount of liquid water inside a fuel cell during operation, comprising:

a pervious value storage configured to store a previous estimated value;
a gas flow rate acquirer configured to obtain a gas flow rate, which is a value representing a current flow rate of a reactive gas in the fuel cell; and
an estimated value determiner configured to: obtain a factor, based on the previous estimated value stored in the previous value storage and the gas flow rate obtained by the gas flow rate acquirer; multiply a period of obtaining the estimated value by the factor, so as to calculate a variation contribution value contributing to a variation in amount of liquid water in the fuel cell; and determine a current estimated value, based on the variation contribution value.

The apparatus of this aspect enables the water content of the fuel cell to be estimated with high accuracy.

SIXTEENTH ASPECT:

According to a sixteenth aspect, there is provided a fuel cell system, comprising:

a fuel cell;

a reactive gas supplier configured to supply a reactive gas to the fuel cell;
a liquid water amount acquirer configured to successively obtain an estimated value of amount of liquid water in the fuel cell during operation; and
a controller configured to control operating condition of the fuel cell by using the estimated value of amount of liquid water obtained by the liquid water amount acquirer, wherein
the liquid water amount acquirer obtains a factor, based on a previous estimated value and a value representing a current flow rate of the reactive gas supplied to the fuel cell; multiplies a period of obtaining the estimated value by the factor, so as to calculate a value contributing to a variation in amount of liquid water in the fuel cell; and determines and outputs a current estimated value, based on the value contributing to the variation in amount of liquid water in the fuel cell.

The fuel cell system of this aspect adequately manages the water condition inside the fuel cell, based on the estimated value of water content of the fuel cell.

The present invention may be implemented by diversity of aspects, for example, a method of estimating the amount of liquid water discharged from the fuel cell, an estimation apparatus of estimating the amount of liquid water discharged from the fuel cell, a method of estimating the amount of liquid water inside the fuel cell, an estimation apparatus of estimating the amount of liquid water inside the fuel cell, a fuel cell system configured to have the functions of any of these methods and apparatuses, a computer program configured to implement the functions of any of these methods and apparatuses, and a storage medium in which such a computer program is stored.

**BRIEF DESCRIPTION OF DRAWINGS**

Fig. 1 is a diagram schematically illustrating the configuration of a fuel cell system;
Fig. 2 is a diagram schematically illustrating the electrical configuration of the fuel cell system;
Fig. 3 is a diagram showing the outline of a method of estimating the water content by a water content estimator according to a first embodiment;
Fig. 4 is a flowchart showing a procedure of water content estimation process performed by the water content estimator of the first embodiment;
Fig. 5 is a graph showing a scavenging-dependent time change of water content of the fuel cell;
Fig. 6 is a diagram showing a map used to obtain a drainage rate;
Fig. 7 is a diagram schematically illustrating the configuration of a fuel cell system according to a second embodiment;
Fig. 8 is a diagram showing the outline of a method of estimating the water content by the water content estimator according to the second embodiment;
Fig. 9 is a flowchart showing a procedure of water content estimation process performed by the water content estimator of the second embodiment;
Fig. 10 is a graph showing the relationship between diffusion coefficient of water and water content percentage of the electrolyte membrane;
Fig. 11 is a graph showing the relationship between water balance and anode drainage ratio;
Fig. 12 is a graph showing the relationship between cell resistance and anode drainage ratio;
Fig. 13 is a flowchart showing a procedure of water content estimation process performed by the water content estimator according to a third embodiment;
Figs. 14A and 14B are diagrams showing a variation in amount of discharged liquid water with an abrupt change in flow rate of reactive gas supply;
Fig. 15 is a diagram showing one example of map used to obtain a correction factor for the amount of discharged liquid water;
Fig. 16 is a flowchart showing a procedure of water content estimation process performed by the water content estimator according to a fourth embodiment;
Fig. 17 is a flowchart showing a procedure of drainage rate map correction process according to the fourth embodiment;
Fig. 18 is a diagram showing one example of time change of electric current at a sub-zero start of the fuel cell;
Figs. 19A and 19B are diagrams illustrating changes in I-V characteristics at the sub-zero start of the fuel cell;
Fig. 20 is a diagram showing one example of map used to obtain a reference water content;
Figs. 21A and 21B are diagrams showing one example of a map used to obtain a correction factor and illustrating correction of the drainage rate map;
Fig. 22 is a diagram illustrating a simulation result to verify the advantageous effects of the correction process of the drainage rate map;
Fig. 23 is a flowchart showing a procedure of drainage rate map correction process according to a fifth embodiment;
Fig. 24 is a diagram showing one example of a map used to obtain a reference water content according to the fifth embodiment;
Fig. 25 is a flowchart showing a procedure of water content estimation process performed by the water content estimator according to a sixth embodiment;
Fig. 26 is a flowchart showing a procedure of during-operation map correction process;
Fig. 27 is a graph showing impedance-based measurement of the water content of the fuel cell;
Fig. 28 is a flowchart showing a procedure of water content estimation process performed by the water content estimator according to a seventh embodiment;

Fig. 29 is a flowchart showing a procedure of previous value correction process;

Fig. 30 is a graph showing the relationship between cell resistance and water content of the fuel cell; and

Fig. 31 is a diagram showing one example of time change of the estimated value of water content on the cathode side when the previous value correction process is performed.

## DESCRIPTION OF EMBODIMENTS

A. First Embodiment

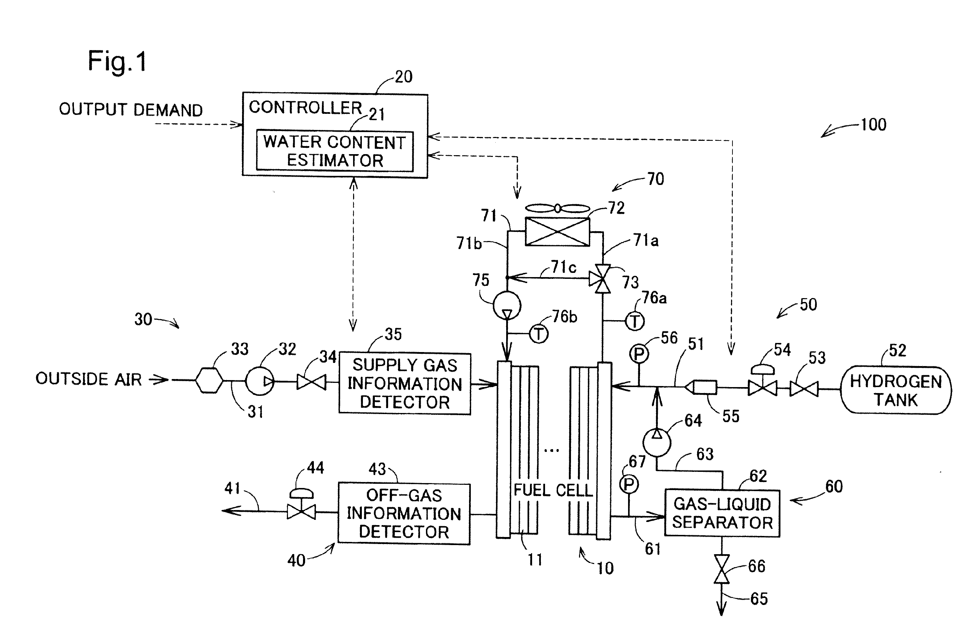

Fig. 1 is a diagram schematically illustrating the configuration of a fuel cell system according to one embodiment of the invention. This fuel cell system 100 is mounted on a fuel cell vehicle to output electric power used as driving force in response to the driver's demand. The fuel cell system 100 includes a fuel cell 10, a controller 20, a cathode gas supply assembly 30, a cathode gas discharge assembly 40, an anode gas supply assembly 50, an anode gas circulation/discharge assembly 60 and a refrigerant supply assembly 70.

The fuel cell 10 is a polymer electrolyte fuel cell configured to generate electric power with supplies of hydrogen (anode gas) and the air (cathode gas) as reactive gases. The fuel cell 10 has the stack structure obtained by stacking a plurality of power generating elements 11 called unit cells. Each power generating element 11 includes a membrane electrode assembly (not shown) provided as the power-generating body having electrodes formed on respective surfaces of an electrolyte membrane, and two separators (not shown) located across the membrane electrode assembly.

The electrolyte membranes of the fuel cell 10 may be made of a polymer electrolyte thin film having favorable proton conductivity in the water-containing wet condition. The electrodes may be made of conductive particles with a catalyst supported thereon to accelerate the power generation reaction. The catalyst may be, for example, platinum (Pt), and the conductive particles may be, for example, carbon (C) particles. Each electrode of the membrane electrode assembly may be formed to have the multi-layered structure of the catalyst-supported electrode and a gas diffusion member provided to spread the reactive gas over the whole area of the electrode.

The controller 20 is constructed by a microcomputer including a central processing unit and a main storage. The controller 20 serves as a power generation controller to receive a demand for output power and control the respective components described below in response to the received demand to make the fuel cell 10 generate electric power. The controller 20 also has the function of a water content estimator 21. The water content estimator 21 successively obtains estimated values of water content as the amount of liquid water contained in the fuel cell 10 during operation in specified periods. The method of estimating the water content by the water content estimator 21 will be described later.

The controller 20 controls the operating conditions of the fuel cell 10, based on the estimated values output from the water content estimator 21. More specifically, the controller 20 controls the respective components 30, 40, 50, 60 and 70 to regulate the stoichiometric ratio of the reactive gases supplied to the fuel cell 10, the pressures of the reactive gases in the fuel cell 10 and the operating temperature of the fuel cell 10. The controller 20 may additionally perform scavenging process at appropriate timings to reduce the amount of water contained in the fuel cell 10, based on the estimated values output from the water content estimator 21. In this manner, the fuel cell system 100 of this embodiment adequately controls the water condition in the fuel cell 10, in order to protect the electrolyte membranes of the fuel cell 10 from extreme dryness and prevent the water from interfering with the smooth flows of the reactive gases.

The cathode gas supply assembly 30 includes a cathode gas piping 31, an air compressor 32, an air flow meter 33, an on-off valve 34 and a supply gas information detector 35. The cathode gas piping 31 is connected with a supply manifold (not shown) on the cathode side of the fuel cell 10.

The air compressor 32 is connected with the fuel cell 10 via the cathode gas piping 31 to compress the intake air and supply the compressed air as cathode gas to the fuel cell 10. The air flow meter 33 is located upstream of the air compressor 32 to measure the amount of the air taken into the air compressor 32 and send the measurement result to the controller 20. The controller 20 drives the air compressor 32 based on the measurement result to adjust the flow rate of the air supplied to the fuel cell 10.

The on-off valve 34 is provided between the air compressor 32 and the fuel cell 10 to be opened and closed by the flow of the supply air through the cathode gas piping 31. More specifically, the on-off valve 34 is normally closed and is opened when the air of a specified pressure is supplied from the air compressor 32 through the cathode gas piping 31.

The supply gas information detector 35 is located downstream of the on-off valve 34. The supply gas information detector 35 detects information on the conditions of the supply air in proximity to the inlet of the manifold for the air supply of the fuel cell 10 (hereinafter referred to as "supply gas information") and sends the detected supply gas information to the controller 20. The supply gas information detector 35 includes a pressure gauge, a thermometer, a dew-point meter and a flow meter and obtains the pressure, the temperature, the water vapor partial pressure and the flow rate of the air supplied to the fuel cell 10 as the supply gas information on the cathode side.

The cathode gas discharge assembly 40 includes a cathode off-gas piping 41, an off-gas information detector 43 and a pressure-regulating valve 44. The cathode off-gas piping 41 is connected with a discharge manifold (not shown) on the cathode side of the fuel cell 10 to discharge the off-gas on the cathode side (hereinafter referred to as "cathode off-gas") out of the fuel cell system 100.

The off-gas information detector 43 detects information on the conditions of the cathode off-gas in proximity to the outlet of the manifold for the off-gas of the fuel cell 10 (hereinafter referred to as "off-gas information") and sends the detected off-gas information to the controller 20. The off-gas information detector 43 includes a pressure gauge, a thermometer, a dew-point meter and a flow meter and obtains the pressure, the temperature, the water vapor partial pressure and the flow rate of the cathode off-gas as the off-gas information on the cathode side.

The pressure-regulating valve 44 is located downstream of the off-gas information detector 43 to regulate the pressure of the cathode off-gas (back pressure on the cathode side of the fuel cell 10). The controller 20 controls the opening of the pressure-regulating valve 44, based on the measured pressure value of the cathode off-gas detected by the off-gas information detector 43.

The anode gas supply assembly 50 includes an anode gas piping 51, a hydrogen tank 52, an on-off valve 53, a regulator 54, a hydrogen supply device 55 and an inlet pressure meter 56. The hydrogen tank 52 is connected with a supply manifold (not shown) on the anode side of the fuel cell 10 via the anode gas piping 51 to supply hydrogen stored in the tank to the fuel cell 10.

The on-off valve 53 is located downstream of the hydrogen tank 52 to be opened and closed by instructions from the controller 20 and thereby control the inflow of hydrogen from the hydrogen tank 52 to the upstream of the hydrogen supply device 55. The regulator 54 is provided between the on-off valve 53 and the hydrogen supply device 55 and serves as a pressure reducing valve to regulate the pressure of hydrogen in the upstream of the hydrogen supply device 55. The opening of the regulator 54 is controlled by the controller 20.

The hydrogen supply device 55 may be constructed by, for example, an injector as an electromagnetic-driven on-off valve. The inlet pressure meter 56 is located downstream of the hydrogen supply device 55 to measure the pressure of hydrogen in proximity to the inlet of the manifold for the hydrogen supply of the fuel cell 10 and send the measurement result to the controller 20. The controller 20 controls the hydrogen supply device 55 to regulate the amount of hydrogen supplied to the fuel cell 10, based on the measurement value of the inlet pressure meter 56.

The anode gas circulation/discharge assembly 60 includes an anode off-gas piping 61, a gas-liquid separator 62, an anode gas circulation piping 63, a hydrogen circulating pump 64, an anode drain piping 65, a drain valve 66 and an outlet pressure meter 67. The anode off-gas piping 61 is arranged to connect a discharge manifold (not shown) on the anode side of the fuel cell 10 with the gas-liquid separator 62. The anode off-gas piping 61 is arranged to introduce the off-gas on the anode side (hereinafter referred to as "anode off-gas") containing the remaining hydrogen unconsumed by the power generation reaction, to the gas-liquid separator 62.

The gas-liquid separator 62 is connected with the anode gas circulation piping 63 and the anode drain piping 65. The gas-liquid separator 62 is configured to separate the gas component from the liquid component included in the anode off-gas and introduce the gas component to the anode gas circulation piping 63, while introducing the liquid component to the anode drain piping 65.

The anode gas circulation piping 63 is connected at a specific position downstream of the hydrogen supply device 55 in the anode gas piping 51. The anode gas circulation piping 63 is equipped with the hydrogen circulating pump 64, which recirculates hydrogen included in the gas component separated by the gas-liquid separator 62 to the anode gas piping 51.

The anode drain piping 65 is arranged to discharge the liquid component separated by the gas-liquid separator 62 out of the fuel cell system 100. The drain valve 66 is provided in the anode drain piping 65 to be opened and closed by instructions from the controller 20. The controller 20 normally closes the drain valve 66 during operation of the fuel cell system 100 and opens the drain valve 66 at predetermined drainage timings and at emission timings of inert gases included in the anode off-gas.

The outlet pressure meter 67 is provided in the anode off-gas piping 61. The outlet pressure meter 67 measures the pressure of the anode off-gas (back pressure on the anode side of the fuel cell 10) in proximity to the outlet of the discharge manifold on the anode side of the fuel cell 10 and sends the measurement result to the controller 20.

The refrigerant supply assembly 70 includes a refrigerant piping 71, a radiator 72, a three-way valve 73, a refrigerant circulating pump 75 and two refrigerant temperature meters 76a and 76b. The refrigerant piping 71 is arranged to circulate the refrigerant for cooling down the fuel cell 10 and includes an upstream piping 71a, a downstream piping 71b and a bypass piping 71c.

The upstream piping 71a is arranged to connect an outlet manifold (not shown) for the refrigerant provided in the fuel cell 10 with the inlet of the radiator 72. The downstream piping 71b is arranged to connect an inlet manifold (not shown) for the refrigerant provided in the fuel cell 10 with the outlet of the radiator 72. The bypass piping 71c has one end connected with the upstream piping 71a via the three-way valve 73 and the other end connected with the downstream piping 71b. The controller 20 controls the opening and closing of the three-way valve 73 to regulate the inflow of the refrigerant to the bypass piping 71c and thereby the inflow of the refrigerant to the radiator 72.

The radiator 72 is provided in the refrigerant piping 71 to cool down the refrigerant by heat exchange between the refrigerant flowing in the refrigerant piping 71 and the outside air. The refrigerant circulating pump 75 is located downstream of the joint of the downstream piping 71b with the bypass piping 71c (on the side closer to the refrigerant inlet of the fuel cell 10) and is driven by instructions from the controller 20.

The two refrigerant temperature meters 76a and 76b are respectively provided in the upstream piping 71a and in the downstream piping 71b and send the respective measurement values to the controller 20. The controller 20 detects the operating temperature of the fuel cell 10, based on the difference between the measurement values by the respective refrigerant temperature meters 76a and 76b. The controller 20 also controls the rotation speed of the refrigerant circulating pump 75 based on the detected operating temperature of the fuel cell 10 and thereby regulates the operating temperature of the fuel cell 10.

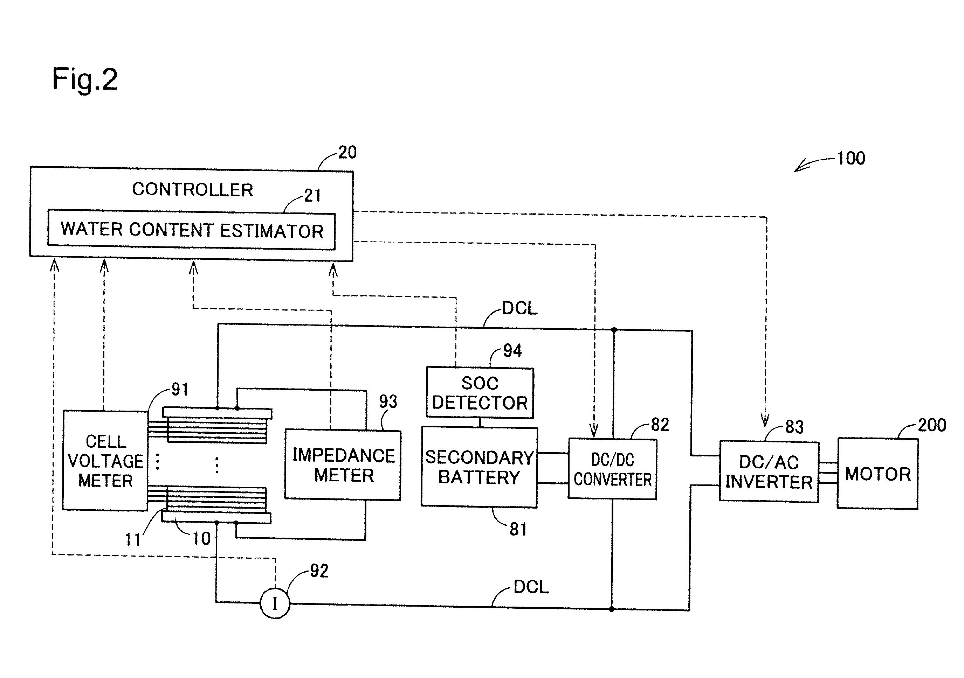

Fig. 2 is a diagram schematically illustrating the electrical configuration of the fuel cell system 100. The fuel cell system 100 includes a secondary battery 81, a DC/DC converter 82 and a DC/AC inverter 83. The fuel cell system 100 also includes a cell voltage meter 91, a current measuring meter 92, an impedance meter 93 and an SOC detector 94.

The fuel cell 10 is connected with the DC/AC inverter 83 via a DC line DCL, and the DC/AC inverter 83 is connected with a motor 200 serving as the driving power source of the fuel cell vehicle. The secondary battery 81 is connected with the DC line DCL via the DC/DC converter 82.

The secondary battery 81 serves as an auxiliary power source of the fuel cell 10 and may be constructed by a chargeable and dischargeable lithium ion battery. The controller 20 controls the DC/DC converter 82 to regulate the electric current and the voltage of the fuel cell 10 and control the charging and discharging of the secondary battery 81, thereby adjusting the voltage level of the DC line DCL.

The secondary battery 81 is connected with the SOC detector 94. The SOC detector 94 detects the state of charge (SOC) of the secondary battery 81 and sends the detected SOC to the controller 20. The controller 20 controls the charging and discharging of the secondary battery 81 based on the detection result of the SOC detector 94, in order to keep the SOC of the secondary battery 81 within a specified range.

The DC/AC inverter 83 converts the DC power generated by the fuel cell 10 and the secondary battery 81 into AC power and supplies the AC power to the motor 200. When regenerative power is generated by the motor 200, the DC/AC inverter 83 converts the regenerative power to DC power. The regenerative power converted to DC power is accumulated in the secondary battery 81 via the DC/DC converter 82.

The cell voltage meter 91 is connected with each of the power generation elements 11 of the fuel cell 10 to measure the voltage of each power generation element 11 (cell voltage). The cell voltage meter 91 sends the measurement results to the controller 20. The controller 20 obtains the voltage output from the fuel cell 10, based on the measurement results of the cell voltage meter 91. The current measuring meter 92 is connected with the DC line DCL to measure the current value output from the fuel cell 10 and send the measurement result to the controller 20.

The impedance meter 93 is connected with the fuel cell 10 and is configured to measure the overall impedance of the fuel cell 10 by applying AC current to the fuel cell 10 and send the measurement result to the controller 20. The controller 20 obtains the resistance of each of the power generation elements 11 of the fuel cell 10 (cell resistance) from the measurement result of the impedance meter 93 and detects that the electrolyte membrane is in dry condition, based on the obtained cell resistance.

As described above, in the fuel cell system 100 according to the embodiment, the controller 20 controls the operating conditions of the fuel cell 10, based on the estimated values of water content of the fuel cell 10 obtained periodically by the water content estimator 21. Specifically, the water content estimator 21 estimates the water content of the fuel cell 10 by the following procedure.

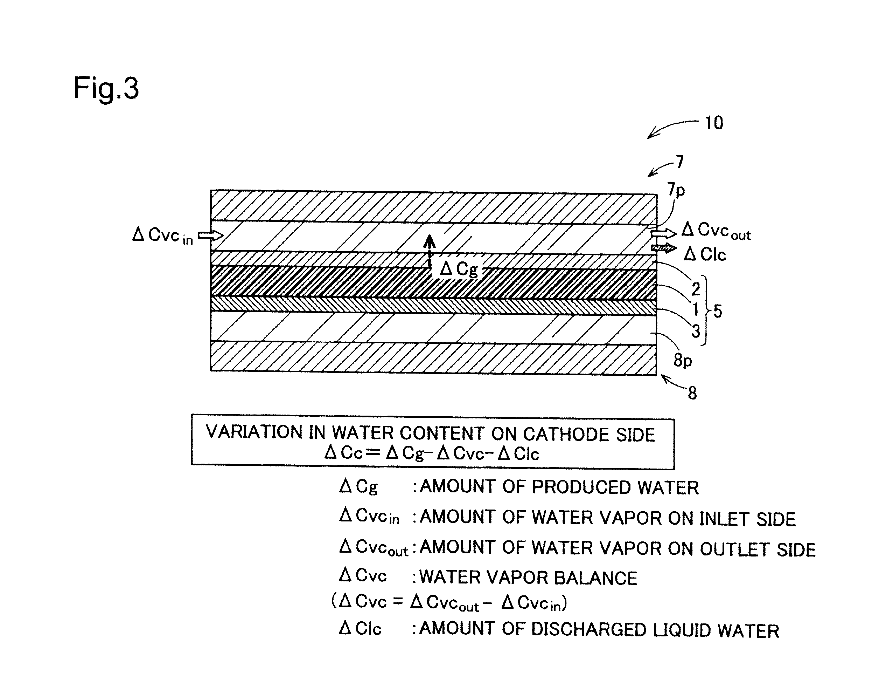

Fig. 3 is a diagram showing the outline of the method of estimating the water content by the water content estimator 21 according to the embodiment. The internal configuration of the fuel cell 10 is schematically illustrated in Fig. 3. Each of the power generation elements 11 of the fuel cell 10 includes a membrane electrode assembly 5, wherein electrodes (cathode 2 and anode 3) are provided on respective surfaces of an electrolyte membrane 1, as mentioned previously. The membrane electrode assembly 5 is placed between a cathode separator 7 located on the cathode 2-side and an anode separator 8 located on the anode 3-side.

The two separators 7 and 8 respectively have flow paths 7p and 8p for the reactive gases provided on their surfaces in contact with the cathode 2 or the anode 3. The flow paths 7p and 8p may be defined by concaves and convexes, such as grooves, formed on the respective outer surfaces of the two separators 7 and 8. More specifically, the flow paths 7p and 8p may be provided by bending or pressing the plate members as the base materials of the separators 7 and 8 to form the concaves and convexes or may be provided by pressing, cutting or etching the respective surfaces of the plate members to form the recesses. According to another embodiment, the flow paths 7p and 8p may be provided by separate members (for example, expanded metal or punched metal) located on the respective surfaces of the two separators 7 and 8.

The "water content of the fuel cell 10" in the description hereof includes the total amount of liquid water contained in the electrolyte membrane 1, the cathode 2 and the anode 3 (i.e., the total amount of liquid water contained in the membrane electrode assembly 5) and the total amount of liquid water existing in the respective flow paths 7p and 8p. The water content of the fuel cell 10 varies with variations in amount of water produced by the power generation reaction of the fuel cell, amount of water vapor supplied with the reactive gases, amount of water vapor discharged with the off-gases and amount of liquid water discharged from the fuel cell 10, during operation of the fuel cell 10.

The water content estimator 21 of the embodiment obtains a variation $\Delta C$ in water content of the fuel cell 10 for a specified duration $\Delta t$ in predetermined periods T and successively outputs estimated values of water content of the fuel cell 10. The variation $\Delta C$ in water content of the fuel cell 10 for the specified duration $\Delta t$ may be calculated by the following procedure.

In the fuel cell 10, the cathode 2-side has significantly greater inflow and outflow amounts of water (including both water vapor and liquid water) than those of the anode 3-side. The procedure of the embodiment accordingly ignores the inflow and outflow amounts of water on the anode 3-side of the fuel cell 10 and assumes that the variation $\Delta C$ in water content of the fuel cell 10 is equal to a variation $\Delta Cc$ in water content on the cathode 2-side of the fuel cell 10 ($\Delta C = \Delta Cc$).

Various values contributing to a change of the variation $\Delta C$ in water content of the fuel cell 10 are expressed as follows:

* Amount of water produced by the power generation reaction of the fuel cell 10 (amount of produced water): $\Delta Cg$:
* Amount of water vapor flowed with the supply air into the cathode 2 (amount of water vapor on inlet side): $\Delta Cvc_{in}$;
* Amount of water vapor discharged with the off gas from the cathode 2 (amount of water vapor on outlet side): $\Delta Cvc_{out}$;
* Difference between the amount of water vapor on outlet side $\Delta Cvc_{out}$ and the amount of water vapor on inlet side $\Delta Cvc_{in}$ in the cathode 2 (cathode water vapor balance): $\Delta Cvc$; and
* Amount of liquid water discharged from the cathode 2 (amount of discharged liquid water): $\Delta Clc$.

The variation $\Delta C$ in water content of the fuel cell 10 is accordingly expressed by Equation (1) given below:

$$\Delta C = \Delta Cg \cdot \Delta Cvc \cdot \Delta Clc \qquad (1)$$

The water content estimator 21 of the embodiment successively calculates the variation $\Delta C$ in water content of the fuel cell 10 in the predetermined periods T according to Equation (1) given above and determines a current estimated value of water content of the fuel cell 10 by reflecting the calculated variation $\Delta C$ on the previous estimated value of water content determined in the previous period. The following describes the estimation procedure more specifically.

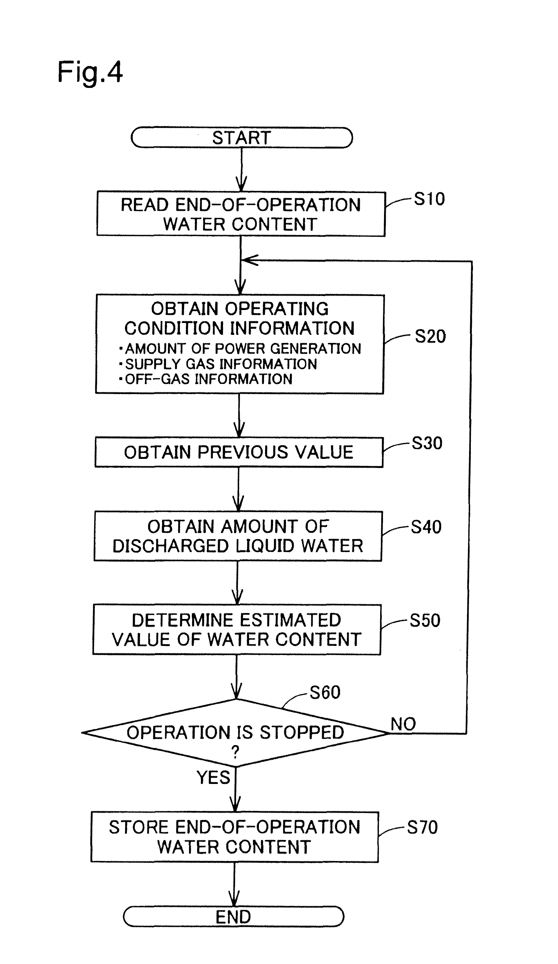

Fig. 4 is a flowchart showing the procedure of water content estimation process performed by the water content estimator 21 according to the embodiment. The water content estimator 21 starts this process at the start of the fuel cell system 100. At step S10, the water content estimator 21 reads an end-of-operation water content, which denotes an estimated value of water content stored in a non-transitory storage (not shown) at the end of the previous operation of the fuel cell system 100.

At step S20, the water content estimator 21 obtains operating condition information regarding the operating conditions of the fuel cell 10 for the specified duration $\Delta t$ in the present period. More specifically, the water content estimator 21 obtains the amount of power generation by the fuel cell 10, the supply gas information and the off-gas information, as the operating condition information. In the description hereinafter, the supply gas information and the off-gas information may be collectively referred to as "gas information".

At step S30, the water content estimator 21 obtains the estimated value of water content determined in the previous period (previous value). In a first period after a restart of operation of the fuel cell system 100, the water content estimator 21 obtains the end-of-operation water content read at step S10 as the previous value.

At step S40, the water content estimator 21 obtains the amount of discharged liquid water $\Delta Clc$ for the specified duration $\Delta t$. More specifically, the water content estimator 21 refers to a map prepared in advance and determines an amount of discharged liquid water per unit time (hereinafter referred to as "drainage rate") dr, based on the previous value obtained at step S30 and the current flow rate of supply air to the fuel cell 10. The water content estimator 21 subsequently multiplies the drainage rate dr by the specified duration $\Delta t$ to calculate the amount of discharged liquid water $\Delta Clc$ ($\Delta Clc = dr \times \Delta t$). The map referred to at step S40 has been set according to the relationship determined by the experiment conducted by the inventors of the present invention as described below.

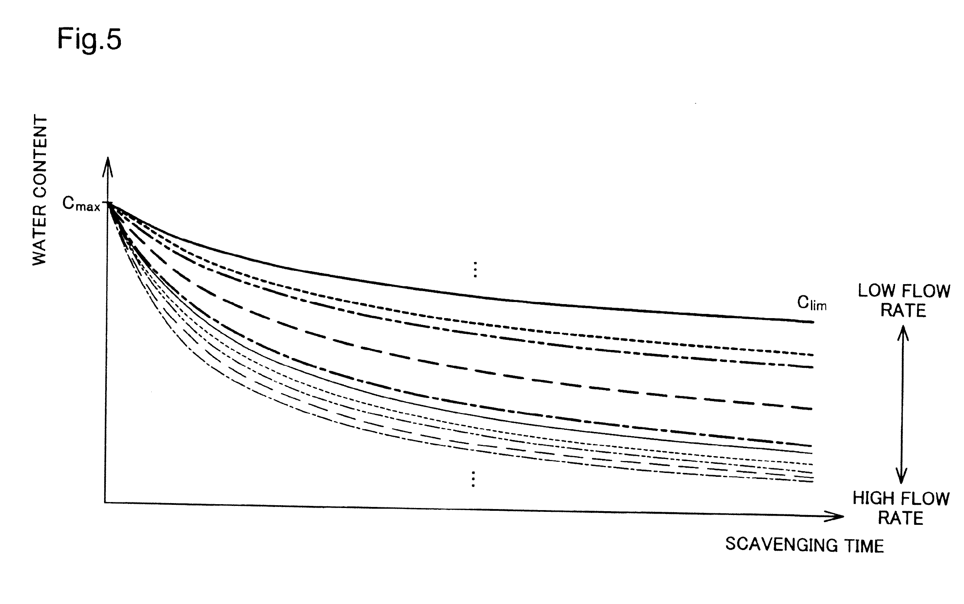

Fig. 5 is a graph obtained by the experiment conducted by the inventors of the present invention and shows a scavenging-dependent time change of the water content of the fuel cell 10, with the water content of the fuel cell 10 as the ordinate and the scavenging time as the abscissa. The experiment conducted by the inventors of the present invention makes the non-humidified scavenging gas flow at a constant flow rate via the manifold of the fuel cell 10 into the fuel cell 10 filled with water and measures a variation in water content of the fuel cell 10 with respect to each flow rate of the scavenging gas.

A water content $C_{max}$ in the graph denotes the amount of water contained the fuel cell 10 at the full water level and is determined depending on the configuration of the fuel cell 10, e.g., the spatial volumes in the flow paths 7p and 8p (Fig. 3) and the maximum water capacity of the membrane electrode assembly 5. The water content of the fuel cell 10 gradually decreases from the water content $C_{max}$ at the full water level along a gentle downward-convex curve against the scavenging time.

The rate of change in water content of the fuel cell 10 according to the scavenging time has the greater value at the shorter scavenging time with respect to any flow rate of the scavenging gas and gradually decreases with an increase in scavenging time. The water content has substantially no change after converging to a certain value of water content $C_{lim}$. The rate of change in water content of the fuel cell 10 according to the scavenging time also has the smaller value at the lower flow rate of the scavenging gas. The convergent value $C_{lim}$ with no substantial change of the water content has the greater value at the lower flow rate of the scavenging gas.

The scavenging time of the scavenging gas in this experiment corresponds to the flow time of the reactive gas in the fuel cell 10 during operation, and the decrease of water content of the fuel cell 10 corresponds to the amount of discharged liquid water from the fuel cell 10 during operation. The inventors of the present invention have accordingly obtained the following findings with respect to the amount of discharged liquid water from the fuel cell 10 for the specified duration $\Delta t$:

(a) The amount of discharged liquid water from the fuel cell 10 for the specified duration $\Delta t$ increases with an increase in amount of water existing in the fuel cell 10;
(b) The amount of discharged liquid water from the fuel cell 10 for the specified duration $\Delta t$ increases with an increase in flow rate of the reactive gas. In other words, the drainage rate increases with an increase in flow rate of the reactive gas; and
(c) The water content of the fuel cell 10 has a limit value, which is the minimum possible water content and does not allow any further decrease due to the flow of the reactive gas. This limit value decreases with an increase in flow rate of the reactive gas and is hereinafter referred to as "drainage limit value".

The inventors of the present invention have also found that the relationship between y and x at any flow rate q of the reactive gas is definable by Equation (2) given below, based on the graph of Fig. 5, wherein y represents the water content of the fuel cell 10 and x represents the flow time of the reactive gas in the fuel cell 10:

$$y = (C_{lim} - C_{max}) \times b/(x\text{-}b) + C_{lim} \qquad (2)$$

wherein

$C_{max}$ represents the water content of the fuel cell 10 at the full water level;
$C_{lim}$ represents the drainage limit value and is determined depending on the flow rate q of the reactive gas; and
b represents a constant defining the rate of change in y and is determined depending on the flow rate q of the reactive gas.

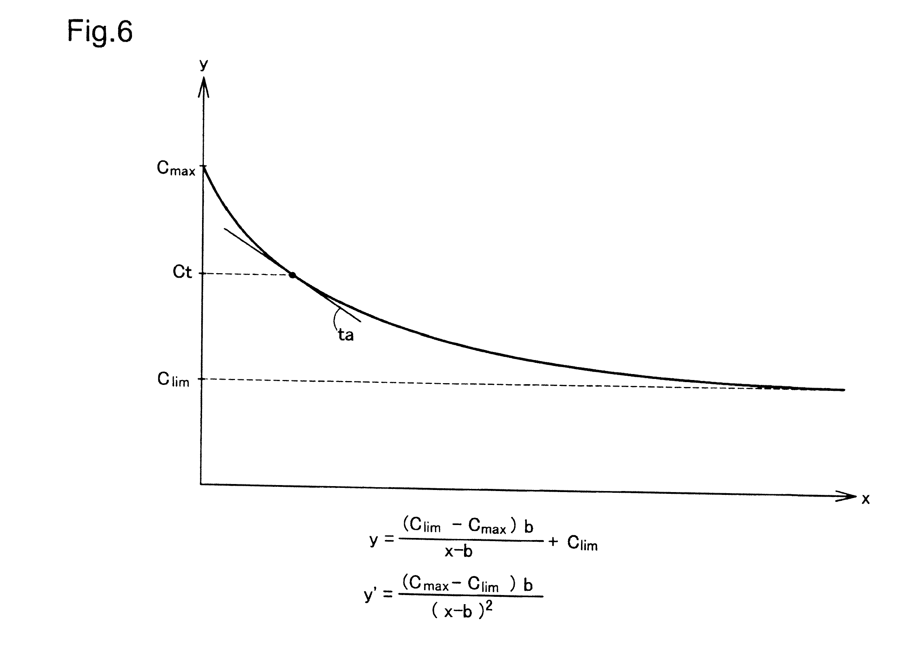

Fig. 6 shows one example of hyperbolic curve given by Equation (2) above, with y as the ordinate and x as the abscissa. When the water content of the fuel cell 10 is equal to Ct, i.e., when y=Ct, the slope of tangent t at the point on this curve indicates the drainage rate at the water content Ct of the fuel cell 10. The drainage rate is thus expressible by differentiating y with respect to x in Equation (2) as shown by Equation (3) below:

$$y' = (C_{max} - C_{lim}) \times b/(x\text{-}b)^2 \qquad (3)$$

Substituting the previous estimated value into y of Equation (2) above to calculate the value of x and subsequently substituting the calculated value of x into Equation (3) above accordingly determines the drainage rate dr at a certain value of water content of the fuel cell 10 specified by the previous estimated value.

As described above, the drainage rate dr is unequivocally determinable, based on the previous estimated value and the current flow rate of the reactive gas supplied to the fuel cell 10. A map showing the relationship of drainage rate dr to the previous estimated value and the current flow rate of the reactive gas supplied to the fuel cell 10 (hereinafter referred to as "drainage rate map") is used at step S40 (Fig. 4).

The drainage rate dr may be regarded as a coefficient that varies depending on the previous estimated value and the current flow rate of the reactive gas supplied to the fuel cell 10. The process of step S40 may thus be construed as the process of obtaining the coefficient that varies depending on the previous estimated value and the current flow rate of the reactive gas supplied to the fuel cell 10 and subsequently determining the amount of discharged liquid water $\Delta$Clc based on the obtained coefficient and the period T of obtaining the estimated value.

At step S50, the water content estimator 21 obtains the amount of produced water $\Delta$Cg and the cathode water vapor balance $\Delta$Cvc, based on the operating condition information of the fuel cell obtained at step S20. More specifically, the water content estimator 21 calculates the amount of produced water $\Delta$Cg and the cathode water vapor balance $\Delta$Cvc according to Equations (4) and (5) given below:

$$\text{Amount of Produced Water } \Delta Cg = (I \times M_{H2O} / F \times 2) \times \Delta t \qquad (4)$$

$$\text{Cathode Water Vapor Balance } \Delta Cvc = (Pcv_{out} \times Qc_{out} / Pc_{out} \times 22.4) -$$

$$(Pcv_{in} \times Qc_{in} / Pc_{in} \times 22.4) \qquad (5)$$

wherein

I represents the electric current value output from the fuel cell 10 for the specified duration $\Delta t$ in the present period;
$M_{H2O}$ represents the molecular weight of water;
F represents the Faraday constant;
$Pcv_{out}$ represents the water vapor partial pressure of the cathode off-gas;
$Qc_{out}$ represents the flow rate of the cathode off-gas;
$Pc_{out}$ represents the pressure of the cathode off-gas;
$Pcv_{in}$ represents the water vapor partial pressure of the supply air;
$Qc_{in}$ represents the flow rate of the supply air; and
$Pc_{out}$ represents the pressure of the supply air.

At step S50, the water content estimator 21 also calculates the variation $\Delta$Cc in water content on the cathode side from the amount of produced water $\Delta$Cg, the cathode water vapor balance $\Delta$Cvc and the amount of discharged liquid water $\Delta$Clc obtained at step S40 according to Equation (1) given above. The water content estimator 21 then reflects the calculated variation $\Delta$Cc on the previous value to determine a current estimated value of water content of the fuel cell 10.

The water content estimator 21 repeats the processing of steps S20 to S50 in the predetermined periods T until the operation of the fuel cell 10 stops (step S60). When the operation of the fuel cell 10 stops, the water content estimator 21 stores the last estimated value of water content of the fuel cell 10 as the end-of-operation water content in the non-transitory storage (step S70).

As described above, in the fuel cell system 100 of the embodiment, the water content estimator 21 refers to the specified relationship based on the experimental results and calculates the drainage rate that varies depending on the water content of the fuel cell 10 and the flow rate of the reactive gas. The water content estimator 21 then obtains the estimated amount of discharged liquid water from the fuel cell 10 with high accuracy based on the calculated drainage rate and thereby determines the estimated value of water content of the fuel cell 10 with high accuracy. The fuel cell system 100 of the embodiment accordingly detects the water condition inside the fuel cell 10 with higher accuracy, thus allowing adequate control of the water condition inside the fuel cell 10.

B. Second Embodiment

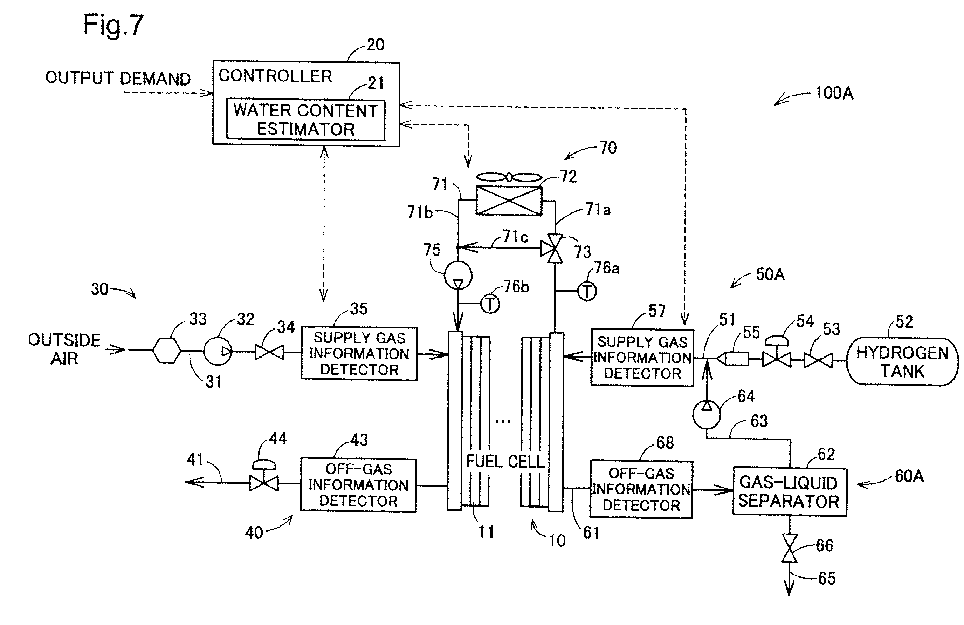

Fig. 7 is a diagram schematically illustrating the configuration of a fuel cell system 100A according to a second embodiment of the invention. The configuration of Fig. 7 is substantially similar to the configuration of Fig. 1, except a supply gas information detector 57 provided instead of the inlet pressure meter 56 in an anode gas supply assembly 50A and an off-gas information detector 68 provided instead of the outlet pressure meter 67 in an anode gas circulation/discharge assembly 60A. The electrical configuration of the fuel cell system 100A of the second embodiment is similar to the electrical configuration of the fuel cell system 100 of the first embodiment (Fig. 2).

As described above, the fuel cell system 100 of the first embodiment estimates the water content of the fuel cell 10 with ignoring the inflow and outflow amounts of water on the anode side of the fuel cell 10 (Fig. 3). The fuel cell system 100A of the second embodiment, on the other hand, estimates the water content of the fuel cell 10 with taking into account the inflow and outflow amounts of water on the anode side of the fuel cell 10. The following describes the latter estimation method more specifically.

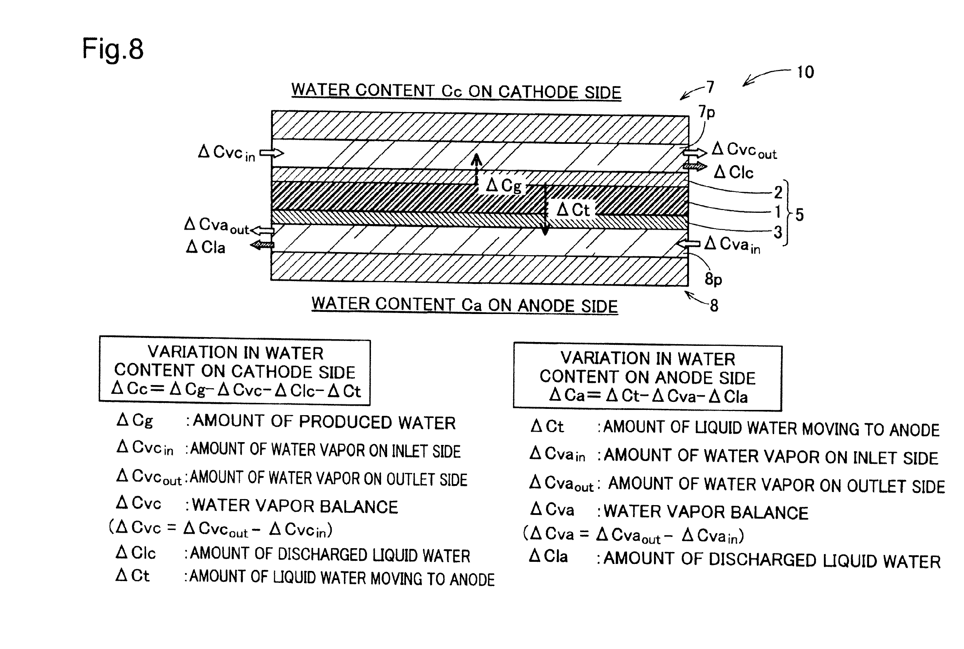

Fig. 8 is a diagram showing the outline of the method of estimating the water content by the water content estimator 21 according to the second embodiment. Fig. 8 is similar to Fig. 3, except addition of arrows showing the movement of water on the anode 3-side and an equation used to estimate the water content with reflecting the inflow and outflow amounts of water on the anode 3-side.

In each of the power generation elements of the fuel cell 10, part of the water produced on the cathode 2-side by the power generation reaction moves across the electrolyte membrane 1 to the anode 3. Water also flows in and flows out in the form of water vapor on the anode 3-side. Additionally, liquid water is also discharged out with the off-gas on the anode 3-side.

As explained above, the water content of the fuel cell 10 varies on the anode 3-side, separately from the variation in water content on the cathode 2-side. In the fuel cell system 100A of the second embodiment, the water content estimator 21 calculates variations $\Delta Cc$ and $\Delta Ca$ in water content on the cathode 2-side and on the anode 3-side for a specified duration $\Delta t$ and determines estimated values $Cc$ and $Ca$ of water content on the cathode 2-side and on the anode 3-side.

In the description hereinafter, the amount of liquid water moving from the cathode 2-side to the anode 3-side for the specified duration $\Delta t$ is called "amount of liquid water moving to anode $\Delta Ct$". The variation $\Delta Cc$ in water content on the cathode 2-side is expressed by Equation (1A) below:

$$\Delta Cc = \Delta Cg - \Delta Cvc - \Delta Clc - \Delta Ct \qquad (1A)$$

wherein the right side of Equation (1A) is similar to the right side of Equation (1) described in the first embodiment, except additional subtraction of the amount of liquid water moving to anode $\Delta Ct$.

In the description below, various values relating to the water content on the anode 3-side other than the amount of liquid water moving to anode $\Delta Ct$ are expressed as follows:

* Amount of water vapor flowed with hydrogen into the anode 3 (amount of water vapor on inlet side): $\Delta Cva_{in}$;
* Amount of water vapor discharged with the off gas from the anode 3 (amount of water vapor on outlet side): $\Delta Cva_{out}$;
* Difference between the amount of water vapor on outlet side $\Delta Cva_{out}$ and the amount of water vapor on inlet side $\Delta Cva_{in}$ in the anode 3 (anode water vapor balance): $\Delta Cva$; and
* Amount of liquid water discharged from the anode 3 (amount of discharged liquid water): $\Delta Cla$.

The variation $\Delta Ca$ in water content on the anode 3-side of the fuel cell 10 is expressed by Equation (1B) below:

$$\Delta Ca = \Delta Ct - \Delta Cva - \Delta Cla \qquad (1B)$$

The water content estimator 21 of the second embodiment successively calculates the two variations $\Delta Cc$ and $\Delta Ca$ in water content in predetermined periods T according to Equations (1A) and (1B) given above. The water content estimator 21 respectively reflects the calculated variations $\Delta Cc$ and $\Delta Ca$ on the previous estimated values of water content on the cathode 2-side and on the anode 3-side obtained in the previous period, so as to determine current estimated values $Cc$ and $Ca$ of water content of the fuel cell 10. The following describes the estimation procedure more specifically.

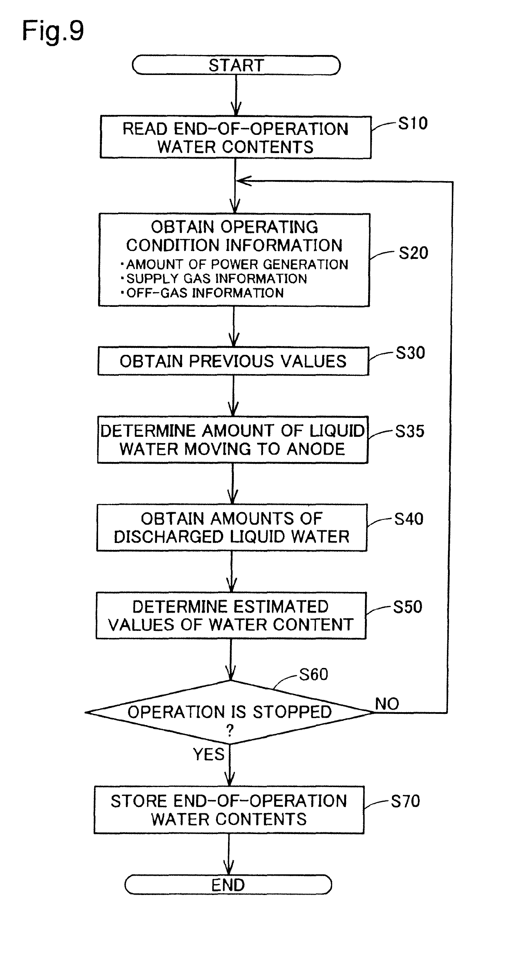

Fig. 9 is a flowchart showing the procedure of water content estimation process performed by the water content estimator 21 according to the second embodiment. The flow of Fig. 9 is similar to the flow of Fig. 4, except addition of step S35. As described above in the first embodiment, at step S10, the water content estimator 21 reads end-of-operation water contents stored in the non-transitory storage. According to the second embodiment, the end-of-operation water contents include an end-of-operation water content on the cathode side and an end-of-operation water content on the anode side.

At step S20, the water content estimator 21 obtains operating condition information regarding the operating conditions of the fuel cell 10 for the specified duration $\Delta t$ in the present period. More specifically, the water content estimator 21 obtains the amount of power generation by the fuel cell 10 and the gas information on both the cathode side and the anode side, as the operating condition information.

At step S30, the water content estimator 21 obtains the estimated values of water content on the cathode side and on the anode side determined in the previous period (previous values). In a first period after a restart of operation of the fuel cell system 100A, the water content estimator 21 obtains the end-of-operation water contents read at step S10 as the previous values.

At step S35, the water content estimator 21 determines the amount of liquid water moving to anode ΔCt, based on the water condition in the electrolyte membrane. The amount of liquid water moving to anode ΔCt varies according to the diffusion coefficient of water. The diffusion coefficient of water in the membrane electrode assembly 5 of the fuel cell 10 varies according to the amount of water contained in the electrolyte membrane.

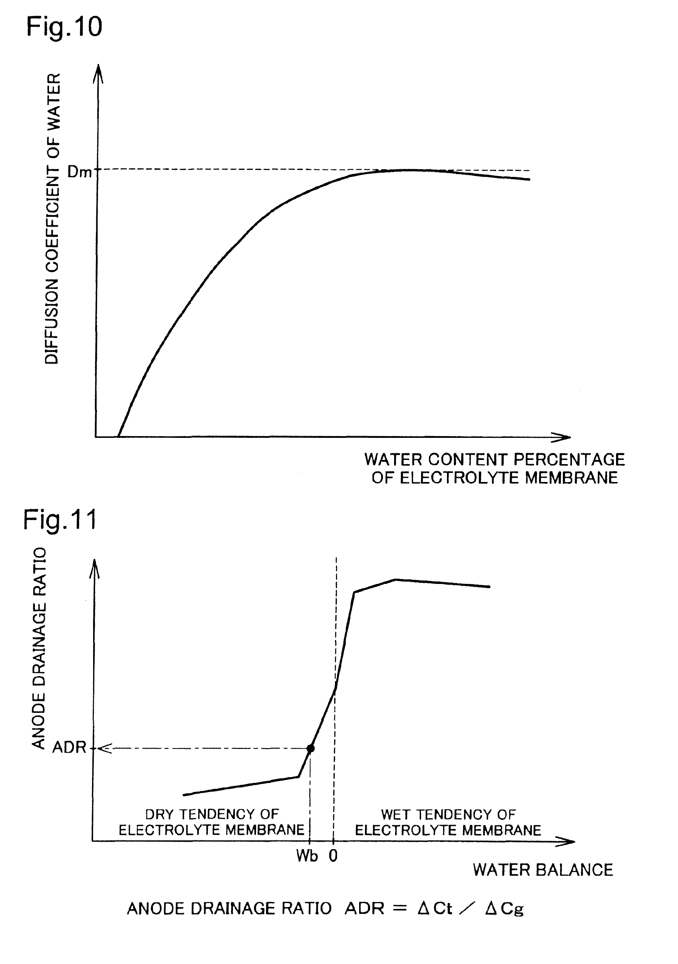

Fig. 10 is a graph obtained by the experiment conducted by the inventors of the present invention and shows the relationship between diffusion coefficient of water and water content percentage of the electrolyte membrane. The "water content percentage of the electrolyte membrane" is determined according to Equation (6) given below:

$$\text{Water Content Percentage Wr of Electrolyte Membrane} =$$

$$(Mm_{wet}/Mm_{dry} - 1) \times 100 \qquad (6)$$

wherein

$Mm_{dry}$ represents the weight of the electrolyte membrane in the dry condition; and
Mmwet represents the weight of the electrolyte membrane in the wet condition.

The water content percentage of the electrolyte membrane is the value showing the amount of water contained in the electrolyte membrane. The diffusion coefficient of water increases along an upward-convex curve to a maximum value Dm with an increase in water content percentage of the electrolyte membrane and gently decreases after reaching the maximum value Dm. In this manner, the diffusion coefficient of water associated with the amount of liquid water moving to anode ΔCt varies according to the amount of water contained in the electrolyte membrane. The amount of liquid water moving to anode ΔCt is thus obtainable, based on the amount of water contained in the electrolyte membrane.

A value shown by Equation (7) below (hereinafter referred to as "water balance") is defined as the index showing the amount of water contained in the electrolyte membrane of the fuel cell 10:

$$\text{Water Balance Wb} = \Delta Cg - \Delta Cvc - \Delta Cva \qquad (7)$$

The water balance Wb is equal to "0" when the water content corresponding to the amount of produced water in the fuel cell 10 is discharged in the form of water vapor on the flow of the reactive gas. The negative value of the water balance Wb indicates the dry tendency of the electrolyte membrane, whilst the positive value of the water balance Wb indicates the wet tendency of the electrolyte membrane.

Fig. 11 is a graph obtained by the experiment conducted by the inventors of the present invention and shows the relationship between water balance and anode drainage ratio. The "anode drainage ratio" means the ratio of the amount of liquid water moving to anode ΔCt to the amount of produced water ΔCg (Equation (8) given below):

$$\text{Anode Drainage Ratio ADR} = \Delta Ct / \Delta Cg \qquad (8)$$

The inventors of the present invention has assumed that the whole amount of liquid water moving from the cathode to the anode is discharged from the anode in the form of liquid water or water vapor and measured the total discharge amount of water from the anode at each water balance to determine the anode drainage ratio. A substantially point-symmetric graph with respect to the zero point of water balance has been obtained by this experiment as the relationship between the anode drainage ratio and the water balance.

As shown in Fig. 11, when the water balance decreases to the negative value, the anode drainage ratio significantly decreases in the vicinity of the zero point of water balance and then has a gentler change slope. When the water balance increases to the positive value, on the other hand, the anode drainage ratio significantly increases in the vicinity of the zero point of water balance and then has a gentler change slope. There is an unequivocal relationship between the water balance and the anode drainage ratio. The anode drainage ratio can thus be determined according to the water balance by obtaining this relationship in advance.

The water content estimator 21 of the second embodiment stores in advance the relationship shown by the graph of Fig. 11 in the form of a map. At step S35 (Fig. 9), the water content estimator 21 refers to this map and reads the anode drainage ratio ADR against the water balance Wb, which is determined depending on the amount of produced water $\Delta Cg$, the cathode water vapor balance $\Delta Cvc$ and the anode water vapor balance $\Delta Cva$. The water content estimator 21 then calculates the amount of liquid water moving to anode $\Delta Ct$ from the anode drainage ratio ADR and the amount of produced water $\Delta Cg$ according to Equation (8) given above ($\Delta Ct=ADR\times\Delta Cg$).

At step S40, the water content estimator 21 respectively obtains amounts of discharged liquid water $\Delta Clc$ and $\Delta Cla$ on the cathode side and on the anode side. As the relationship between the scavenging time and the water content of the fuel cell described previously with reference to Fig. 5, two relationships, i.e., a relationship on the cathode side and a relationship on the anode side are obtained by scavenging only on the cathode side and only on the anode side in the fuel cell filled with water. The water content estimator 21 of the second embodiment stores in advance drainage rate maps on the cathode side and on the anode side, based on these two relationships. At step S40, the water content estimator 21 refers to these two drainage rate maps to read the drainage rate on the cathode side and the drainage rate on the anode side and determines the amounts of discharged liquid water $\Delta Clc$ and $\Delta Cla$, based on the obtained drainage rates.

At step S50, the water content estimator 21 calculates a variation $\Delta Cc$ in water content on the cathode side and a variation $\Delta Ca$ in water content on the anode side according to Equations (1A) and (1B) described above. The water content estimator 21 then reflects the calculated variations $\Delta Cc$ and $\Delta Ca$ in water content on the respective previous values, so as to determine current estimated values Cc and Ca of water content on the cathode side and on the anode side.

The anode water vapor balance $\Delta Cva$ is calculated by Equation (5a) below, which is equivalent to Equation (5) given above:

$$\text{Anode Water Vapor Balance } \Delta Cva = (Pav_{out} \times Qa_{out} / \ Pa_{out} \times 22.4) \text{ -}$$

$$(Pav_{in} \times Qa_{in} / \ Pa_{in} \times 22.4) \tag{5a}$$

wherein

$Pav_{out}$ represents the water vapor partial pressure of the anode off-gas;
$Qa_{out}$ represents the flow rate of the anode off-gas;
$Pa_{out}$ represents the pressure of the anode off-gas;
$Pav_{in}$ represents the water vapor partial pressure of the supply hydrogen;
$Qa_{in}$ represents the flow rate of the supply hydrogen; and
$Pa_{out}$ represents the pressure of the supply hydrogen.

The water content estimator 21 repeats the processing of steps S20 to S50 in the predetermined periods T until the operation of the fuel cell 10 stops (step S60). When the operation of the fuel cell 10 stops, the water content estimator 21 stores the two last estimated values Cc and Ca of water content as the end-of-operation water contents in the non-transitory storage (step S70).

The fuel cell system 100A of the second embodiment separately determines the estimated values Cc and Ca of water content on the cathode side and on the anode side. In one application, the controller 20 may control the operations of the fuel cell 10, based on only the estimated value Cc of water content on the cathode side. Even in this application, the estimated value Cc of water content on the cathode side is given as the value of the higher accuracy reflecting the amount of water moving to the anode. This configuration thus enables control of the water condition inside the fuel cell 10 more adequately, compared with the first embodiment.

In another application, the controller 20 may control the water condition on the anode side and the water condition on the cathode side, based on the estimated values Cc and Ca of water content on the cathode side and on the anode side. For example, the controller 20 may set the flow rates of the scavenging gas on the cathode side and on the anode side, based on the estimated values Cc and Ca of water content on the cathode side and on the anode side and respectively perform the scavenging operations on the cathode side and on the anode side inside the fuel cell 10.

As described above, in the fuel cell system 100A of the second embodiment, the water content estimator 21 obtains the amount of water moving from the cathode to the anode and additionally determines the estimated value Ca of water content on the anode side. This configuration thus enables the water condition inside the fuel cell 10 to be detected with higher accuracy and to be controlled more adequately, compared with the fuel cell system 100 of the first embodiment.

B1. Another Configuration of Second Embodiment

The second embodiment uses the water balance as the index showing the amount of water contained in the electrolyte membrane. The index showing the amount of water contained in the electrolyte membrane is, however, not limited to the water balance but may be another value associated with the amount of water contained in the electrolyte membrane.

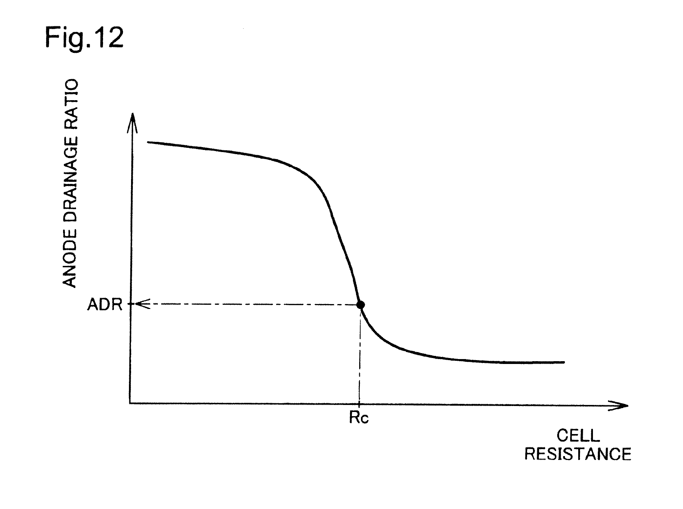

Fig. 12 is a graph obtained by the experiment conducted by the inventors of the present invention and shows the relationship between cell resistance and anode drainage ratio. The inventors of the present invention have measured the cell resistance by the AC impedance method and measured the anode drainage ratio against the cell resistance to obtain this graph. In this manner, there is an unequivocal relationship between the cell resistance and the anode drainage ratio. The water content estimator 21 may store in advance a map showing the relationship between the cell resistance and the anode drainage ratio as shown in Fig. 12 and refer to this map to read the anode drainage ratio ADR against the cell resistance Rc determined from the measurement result of the impedance meter 93.

C. Third Embodiment

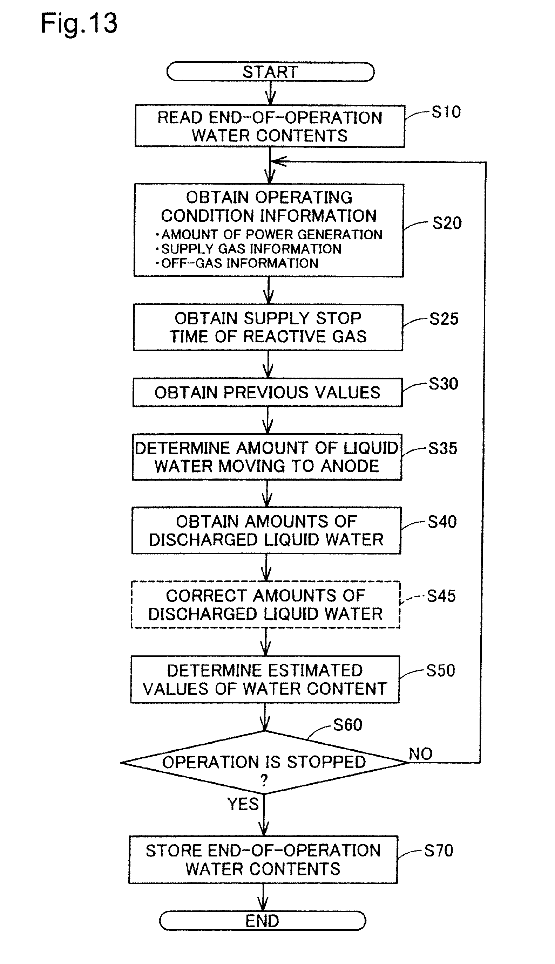

Fig. 13 is a flowchart showing the procedure of water content estimation process performed by the water content estimator 21 in a fuel cell system according to a third embodiment of the invention. The flow of Fig. 13 is substantially similar to the flow of Fig. 9, except addition of steps S25 and S45. The configuration of the fuel cell system of the third embodiment is similar to that of the fuel cell system 100A of the second embodiment (Figs. 2 and 7).

The inventors of the present invention have found that the amount of liquid water discharged from the fuel cell 10 increases after repetition of abrupt changes, i.e., abrupt decrease and subsequent abrupt increase, in flow rate of the reactive gas supplied to the fuel cell 10 during operation, for example, as in the case of a restart after a temporary stop of the reactive gas supply. When a temporary stop of the reactive gas supply is detected from the operating condition information, the water content estimator 21 of the third embodiment corrects the amounts of discharged liquid water ΔClc and ΔCla, which are used to determine the estimated values of water content.

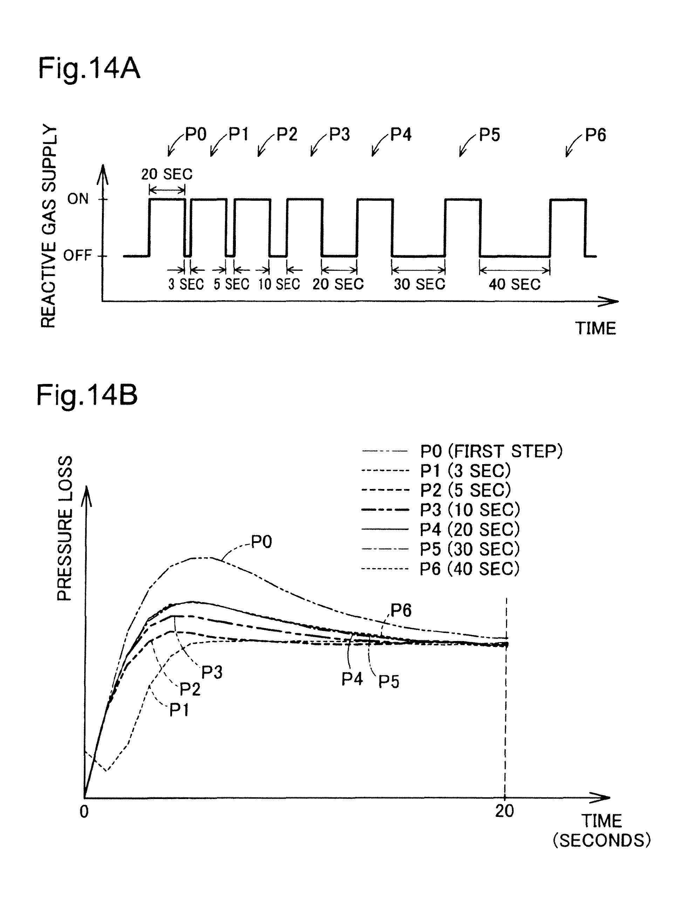

Figs. 14A and 14B are diagrams obtained by the experiment conducted by the inventors of the present invention and show a variation in amount of discharged liquid water with an abrupt change in flow rate of reactive gas supply. Fig. 14A is a timing chart showing the supply (ON)/stop (OFF) timings of the reactive gas to the fuel cell in this experiment.

The inventors of the present invention have repeated the operation of stopping the reactive gas supply after the continuous supply of the reactive gas at a constant flow rate to the fuel cell for a specified duration (about 20 seconds) in predetermined periods (3 seconds, 5 seconds, 10 seconds, 20 seconds, 30 seconds and 40 seconds) as shown in Fig. 14A. In Fig. 14A, respective steps P0 to P6 in which the reactive gas supply continues for the specified duration are shown as upward-convex pulses.

Fig. 14B is a graph showing time changes of pressure in the fuel cell with respect to the steps P0 to P6 in which the reactive gas supply continues for the specified duration. The pressure loss temporarily increases and then gently decreases in any of the steps P0 to P6. The maximum value of the pressure loss gradually increases in the ascending order of the steps P1 to P4 after the first step P0. In the steps P5 and P6, the changes in pressure loss converge to a substantially constant change.

The change in pressure loss of the fuel cell in each of the steps P0 to P6 is associated with the amount of liquid water discharged from the fuel cell. Specifically, the step with the greater maximum value of pressure loss has the greater amount of liquid water discharged from the fuel cell. More specifically, the first step P0 has the greatest amount of discharged liquid water. The amount of discharged liquid water increases in the ascending order to the subsequent steps P1 to P4. In the steps P5 and P6, substantially equal amounts of liquid water to that in the step P4 are discharged.

The gradual increase in amount of discharged liquid water in the steps P1 to P4 may be ascribed to the increasing amount of liquid water moving from the membrane electrode assembly to the gas flow path accompanied with the gradually lengthened stop time of reactive gas supply prior to the respective steps P1 and P4. The substantially equal amounts of discharged liquid water in the steps P4 to P6 may be attributed to that the amount of liquid water moving to the gas flow path converges to a certain value.

As discussed above, a temporary decrease in flow rate of the reactive gas causes liquid water to be moved to the gas flow path, and the amount of liquid water discharged from the fuel cell increases when the flow rate of the reactive gas returns to its original level. The amount of discharged liquid water has the increasing growth rate with an increase in duration when the flow rate of the reactive gas is lowered, until reaching a specific discharge level.

At step S20 (Fig. 13), the water content estimator 21 of the third embodiment obtains the amount of power generation by the fuel cell 10 and the gas information on the cathode side and the gas information on the anode side, as the operating condition information. At step S25, the water content estimator 21 detects a temporary stop of air supply or hydrogen supply from the information on the flow rate of supply air and the flow rate of supply hydrogen included in the supply gas information and obtains its supply stop time.

At steps S30 to S40, the water content estimator 21 performs the similar process to that of the second embodiment described above. The water content estimator 21 obtains the amounts of discharged liquid water $\Delta Clc$ and $\Delta Cla$ at step S40 and subsequently corrects the amounts of discharged liquid water $\Delta Clc$ and $\Delta Cla$ at step S45. More specifically, the water content estimator 21 refers to specified maps to obtain correction factors for correcting the amounts of discharged liquid water $\Delta Clc$ and $\Delta Cla$.

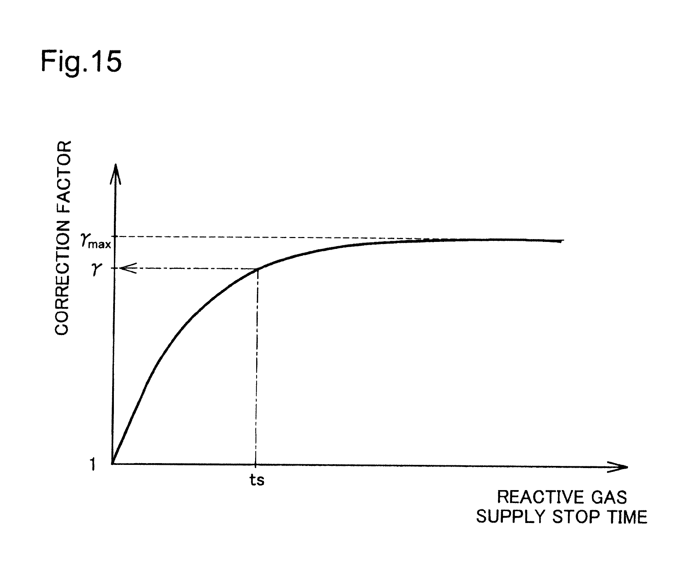

Fig. 15 is a diagram showing one example of such maps experimentally set by the inventors of the present invention to obtain a correction factor for the amount of discharged liquid water $\Delta Clc$ or $\Delta Cla$. The inventors of the present invention have repeated the operation of supplying the reactive gas to the fuel cell at a constant flow rate q and temporarily stopping the gas supply with changing the duration when the supply of the reactive gas is temporarily stopped (gas supply stop time) as described above with reference to Figs. 14A and 14B. An amount of liquid water Ea discharged from the fuel cell per unit time has subsequently been measured on a restart of the reactive gas supply with respect to each gas supply stop time.

The inventors of the present invention also have continuously supplied the reactive gas at the constant flow rate q without any temporary stop and measured an amount of discharged liquid water per unit time in periods corresponding to the measurement periods of the above measured value Eb, as a reference discharge amount Eb. A correction factor $\gamma$ with respect to each gas supply stop time has been given as $\gamma = Eb/Ea$ ($\gamma \geq 1$), wherein Ea represents a measured value with respect to each gas supply stop time and Eb represents a corresponding reference discharge amount. This has given a relationship that the correction factor $\gamma$ gradually increases along an upward-convex curve with an increase in gas supply stop time and converges to a maximum value $\gamma_{max}$ as shown in the graph of Fig. 5.

The water content estimator 21 of the third embodiment stores in advance maps of such relationships as shown in Fig. 15 with respect to each flow rate of supply air and each flow rate of supply hydrogen. At step S45, the water content estimator 21 reads maps corresponding to the current flow rate of supply air and corresponding to the current flow rate of supply hydrogen and obtains respective correction factors $\gamma$ at the supply stop time ts detected at step S25. The water content estimator 21 then multiplies the amounts of discharged liquid water $\Delta Clc$ and $\Delta Cla$ obtained at step S40 by the respective correction factors $\gamma$ obtained at step S45, so as to correct the amounts of discharged liquid water $\Delta Clc$ and $\Delta Cla$.

As described above, when a temporary stop of the reactive gas supply is detected, the fuel cell system of the third embodiment uses the amounts of discharged liquid water $\Delta Clc$ and $\Delta Cla$ corrected with the respective correction factors $\gamma$ according to the supply stop time to calculate the estimated values Cc and Ca of water content. This configuration enables the water condition inside the fuel cell 10 to be detected with higher accuracy.

D. Fourth Embodiment

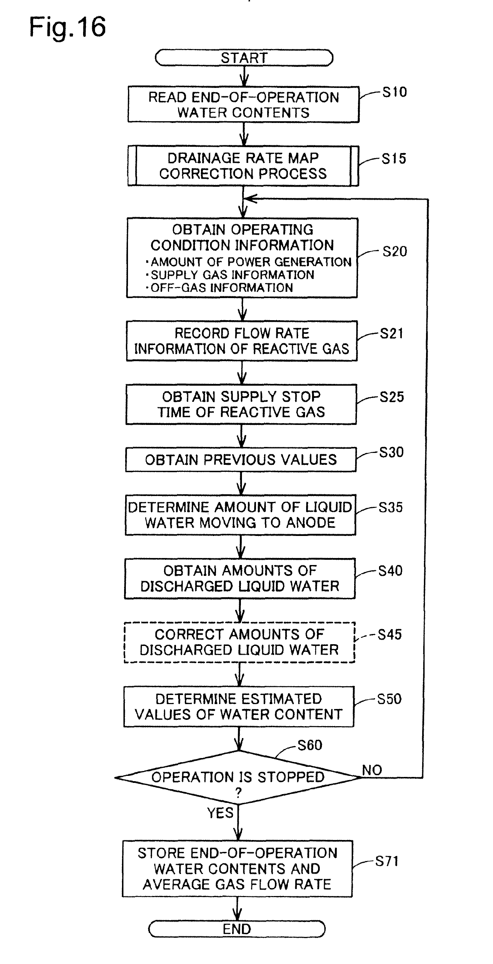

Fig. 16 is a flowchart showing the procedure of water content estimation process performed by the water content estimator 21 in a fuel cell system according to a fourth embodiment of the invention. The flow of Fig. 16 is substantially similar to the flow of Fig. 13, except addition of steps S15 and S21 and replacement of step S70 with step S71. The configuration of the fuel cell system of the fourth embodiment is similar to that of the fuel cell system of the third embodiment (Figs. 2 and 7).

After reading the end-of-operation water contents at step S10, the water content estimator 21 of the fourth embodiment performs a correction process to correct the drainage rate map used at step S40 (step S15). As discussed previously in the second embodiment, the water content estimator 21 is provided with the two drainage rate maps for the cathode and for the anode. Only the drainage rate map for the cathode is, however, subjected to the correction process of step S15. The details of the correction process at step S15 will be described later.

At step S21, the water content estimator 21 records information on the flow rate of supply air in the supply gas information included in the operating condition information obtained at step S20, in each period. At step S71, the water content estimator 21 calculates a time averaged flow rate of supply air (average gas flow rate) during operation of the fuel cell 10, based on the information on the flow rate of supply air recorded at step S25. The calculated average gas flow rate is stored with the end-of-operation water contents in the non-transitory storage. The water content estimator 21 reads the stored average gas flow rate to be used for correction during the correction process at step S15 on a next start of the fuel cell system.

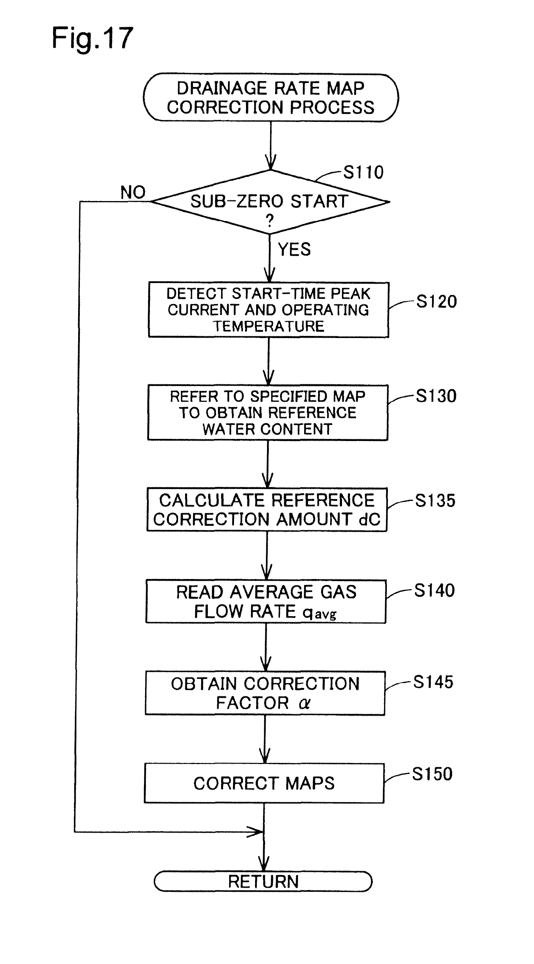

Fig. 17 is a flowchart showing the procedure of the correction process of the drainage rate map performed at step S15. At step S110, the water content estimator 21 determines whether the fuel cell 10 starts operation at temperature below freezing point, based on the current temperature of the fuel cell 10 measured by the refrigerant temperature meters 76a and 76b.

When the temperature of the fuel cell 10 is not below freezing point, the water content estimator 21 immediately terminates this correction process and returns to the water content estimation process (Fig. 16) to resume the processing of and after step S10. When the temperature of the fuel cell 10 is below freezing point, on the other hand, the water content estimator 21 detects a maximum value of temporarily increasing electric current at the start of the fuel cell 10 (hereinafter referred to as "start-time peak current") (step S120). The water content estimator 21 also detects the operating temperature of the fuel cell 10 when the start-time peak current is detected.

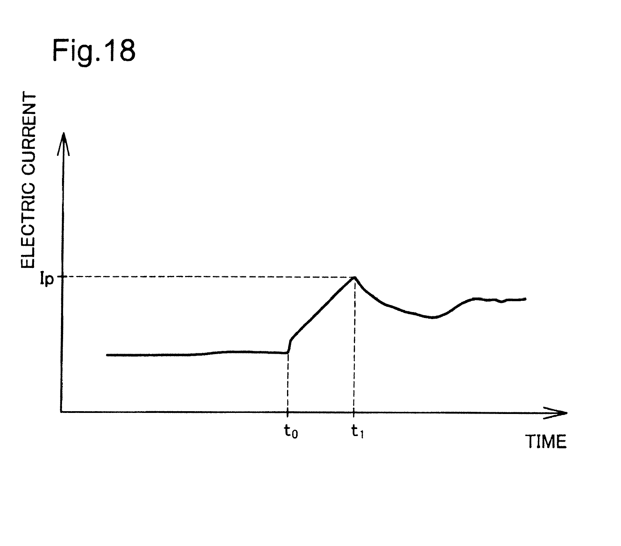

Fig. 18 is a diagram showing one example of time change of electric current at the sub-zero start of the fuel cell. When the voltage is controlled to a fixed value at the sub-zero start of the fuel cell, a specific change in electric current is observed, where the electric current increases to a maximum value Ip at a substantially fixed gradient immediately after the start (time $t_0$ to time $t_1$) and subsequently decreases. Such a temporary increase of the electric current is ascribed to a change in I-V characteristics of the fuel cell at the sub-zero start as discussed below.

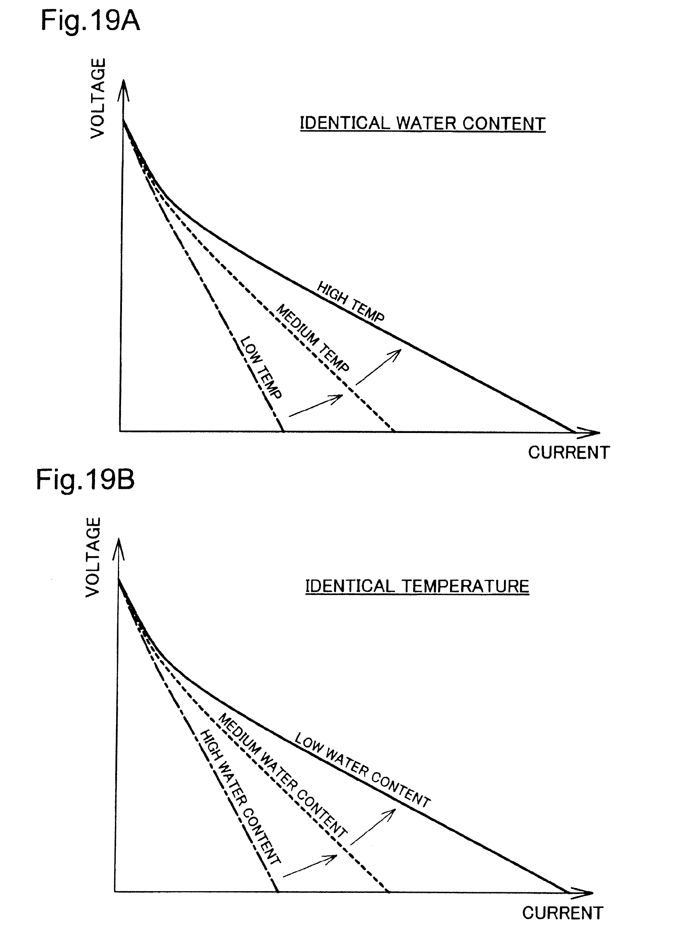

Figs. 19A and 19B are diagrams illustrating changes in I-V characteristics at the sub-zero start of the fuel cell. The graph of Fig. 19A shows a change in I-V characteristics under the conditions of an identical water content and different temperatures of the fuel cell. In the graph of Fig. 19A, the I-V characteristics change in the direction of improving the power generation efficiency with an increase in temperature of the fuel cell. This is because the proton transfer resistance in the electrolyte membrane and in the catalyst layer decreases with an increase in temperature of the fuel cell.

Fig. 19B shows a change in I-V characteristics under the conditions of an identical temperature and different water contents of the fuel cell. In the graph of Fig. 19B, the I-V characteristics change in the direction of improving the power generation efficiency with a decrease in water content of the fuel cell. This is because the diffusion resistance of the reactive gas in the catalyst layer decreases with a decrease in water content of the fuel cell.

Controlling the voltage of the fuel cell to a fixed value at the sub-zero start causes an increase in electric current by the change in I-V characteristics accompanied with an increase in operating temperature of the fuel cell immediately after the start (Fig. 19A). The increase in electric current leads to an increase in amount of produced water in the fuel cell and thereby an increase in water content of the fuel cell. At a certain time, the electric current accordingly starts decreasing by the change in I-V characteristics accompanied with an increase in water content of the fuel cell (Fig. 19B).

In other words, the start-time peak current, which is the maximum value of electric current at the sub-zero start, can be determined depending on the temperature of the fuel cell and the water content of the fuel cell. The water content of the fuel cell is thus determinable by measuring the temperature of the fuel cell and the start-time peak current at the sub-zero start of the fuel cell, based on the specified relationships of start-time peak current to the temperature of the fuel cell and the water content of the fuel cell.

At step S130 (Fig. 17), the water content estimator 21 refers to a specific map of the above relationships to obtain the current water content of the fuel cell 10, based on the start-time peak current and the operating temperature of the fuel cell 10 obtained at step S120. The water content obtained here is used as the reference value for correction in the subsequent process. Hereinafter this water content is referred to as "reference water content".

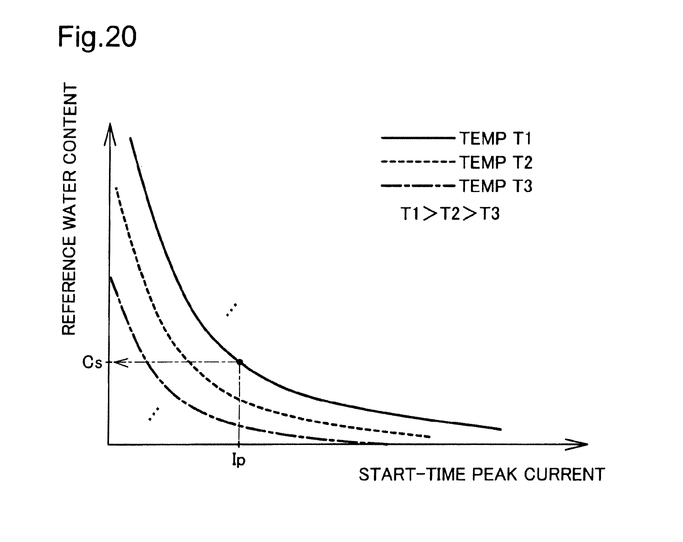

Fig. 20 is a diagram showing one example of the map used to obtain the reference water content at step S130, with the start-time peak current as the abscissa and the reference water content as the ordinate. The inventors of the present invention have obtained this map by measuring the start-time peak current with respect to each combination of the operating temperature and the water content of the fuel cell.

This map specifies the relationship of reference water content exponentially increasing with a decrease in start-time peak current at each operating temperature of the fuel cell. This map also specifies the relationship of reference water content decreasing with a decrease in operating temperature of the fuel cell under the condition of a fixed start-time peak current.

Fig. 20 shows only the curves at operating temperatures T1, T2 and T3 (T1> T2> T3) with omitting the curves at the other operating temperatures. The broken-line arrow in Fig. 20 schematically shows that a reference water content Cs is obtained when the operating temperature of the fuel cell 10 is equal to T1 and the start-time peak current is equal to Ip.

At step S135 (Fig. 17), the water content estimator 21 multiplies the difference between the reference water content Cs and an end-of-operation water content Cp on the cathode side read at step S10 in Fig. 16 by a factor $\beta$ ($0<\beta< 1$) to calculate a reference correction amount dC (Equation (9) below).

$$\text{Reference Correction Amount dC}= \beta\times(\text{Cs-Cp}) \qquad (9)$$

The function of the factor $\beta$ will be described later.

At step S140, the water content estimator 21 reads an average gas flow rate $q_{avg}$ stored in the non-transitory storage at step S71. At step S145, the water content estimator 21 refers to a map described below to obtain a correction factor $\alpha$ for correcting the drainage rate map of liquid water, based on the average gas flow rate $q_{avg}$ and the reference correction amount dC.

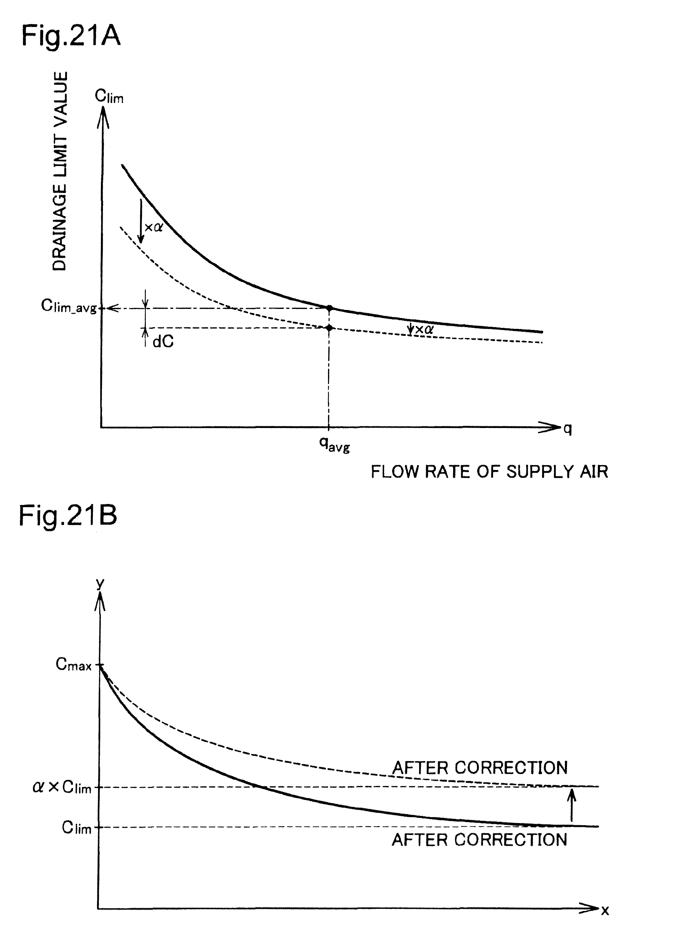

Fig. 21A is a diagram showing one example of the map used to obtain the correction factor $\alpha$ (hereinafter

referred to as "correction value-obtaining map"). As described above with reference to Figs. 5 and 6, the relationship as the basis of the drainage rate map has the drainage limit value $C_{lim}$, which is the minimum possible water content and does not allow any more decrease due to the flow of the reactive gas, with respect to each flow rate of the reactive gas. The correlation of the drainage limit value $C_{lim}$ to the flow rate q of supply air based on this relationship is set in the correction value-obtaining map. More specifically, the relationship that the drainage limit value $C_{lim}$ decreases along a downward-convex curve with a decrease in flow rate q of supply air is set in the correction value-obtaining map.

The water content estimator 21 refers to the correction value-obtaining map to obtain a drainage limit value $C_{lim\_avg}$ at the average gas flow rate $q_{avg}$ read at step S140. The water content estimator 21 then substitutes the drainage limit value $C_{lim\_avg}$ at the average gas flow rate $q_{avg}$ into Equation (10) below to obtain the correction factor $\alpha$:

$$\alpha = (C_{lim\_avg} + dC) / C_{lim\_avg} \qquad (10)$$

At step S150 (Fig. 17), the water content estimator 21 multiplies all the drainage limit values $Cl_{im}$ in the correction value-obtaining map by the correction factor $\alpha$. Such multiplication corrects the correlation of the drainage limit value $C_{lim}$ to the flow rate q of the reactive gas specified in the correction value-obtaining map. In Fig. 21A, in order to illustrate correction made on the correction value-obtaining map, the solid-line curve shows the correlation before correction and the broken-line curve shows the correlation after correction.

At step S150, the water content estimator 21 also corrects the drainage limit value $C_{lim}$ in the drainage rate map. More specifically, the drainage limit value $C_{lim}$ in Equation (3) above specified for each flow rate of the reactive gas may be multiplied by the correction factor $\alpha$.

Fig. 21B is a diagram illustrating correction of the drainage rate map, accompanied with the correction of the drainage limit value $C_{lim}$ using the correction factor $\alpha$. In Fig. 21B, the solid-line curve shows a hyperbolic curve according to Equation (2) (similar to Fig. 6) before correction, and the broken-line curve shows a hyperbolic curve after correction. Correcting the drainage limit value $C_{lim}$ varies the change rate of the hyperbolic curve according to Equation (2) and thereby changes the relationship (Equation (3) above) specified in the drainage rate map. The correction process assumes that there is a certain water content corresponding to the drainage limit value $C_{lim\_avg}$ under the condition of scavenging at the previous average gas flow rate during previous operation of the fuel cell 10 and corrects the drainage rate map on the basis of this water content.

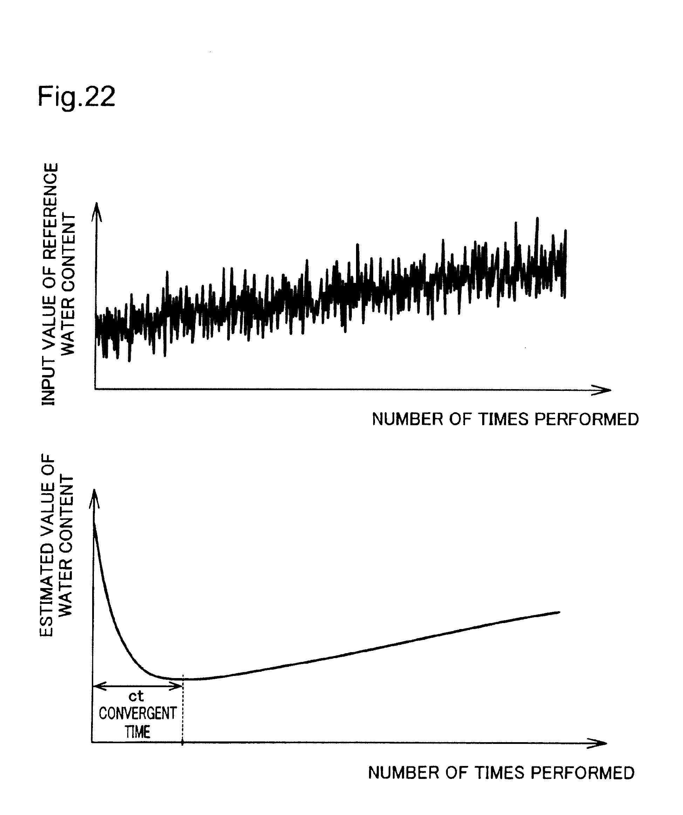

Fig. 22 is a diagram illustrating one example of simulation result to verify the advantageous effects of the correction process of the drainage rate map and explain the function of the factor $\beta$ in Equation (9) above. The inventors of the present invention have performed simulation of repeating the water content estimation process with successively inputting the significantly varying value as the reference water content, in order to verify the advantageous effects of the correction process of the drainage rate map described above.

The upper diagram of Fig. 22 is a graph showing a variation (distribution) of input value, with the input value of reference water content as the ordinate and the number of times when the water content estimation process is performed as the abscissa. In correlation to this upper graph, the lower diagram of Fig. 22 is a graph showing a change in result of the water content estimation process, with the number of times when the water content estimation process is performed as the abscissa and the estimated value of water content as the ordinate.

The measured water content of the fuel cell 10 given as the reference water content may be obtained as the varying value due to the influence of, for example, some error in the actual state. When the difference between the reference water content and the end-of-operation water content is set to the correction amount in the above correction process, the influence of such variation may reflect on the correction. This may result in lowering the accuracy of the estimated value of water content of the fuel cell 10.

The water content estimator 21 of the fourth embodiment uses the factor P to make the value of the reference correction amount dC smaller than the difference between the end-of-operation water content Cp and the reference water content Cs according to Equation (9) above. This adjusts the degree of correction, in order to gradually increase the accuracy of correction by integration of the correction process.

When there is a significant difference between the reference water content and the end-of-operation water content, the result of the water content estimation process gives stable values after a convergent time ct when the accuracy of correction gradually increases in the initial stage as shown in the lower graph of Fig. 22. As described above, the factor $\beta$ used in Equation (9) above has the function of absorbing the influence of the variation in reference water content.

As described above, the water content estimator 21 of the fourth embodiment uses the water content of the fuel cell 10 obtained by the method other than the drainage rate-based estimation method of the water content, as the reference value for correction and corrects the map used to determine the drainage rate. This further improves the estimation accuracy by the drainage rate-based estimation method of the water content.

E. Fifth Embodiment

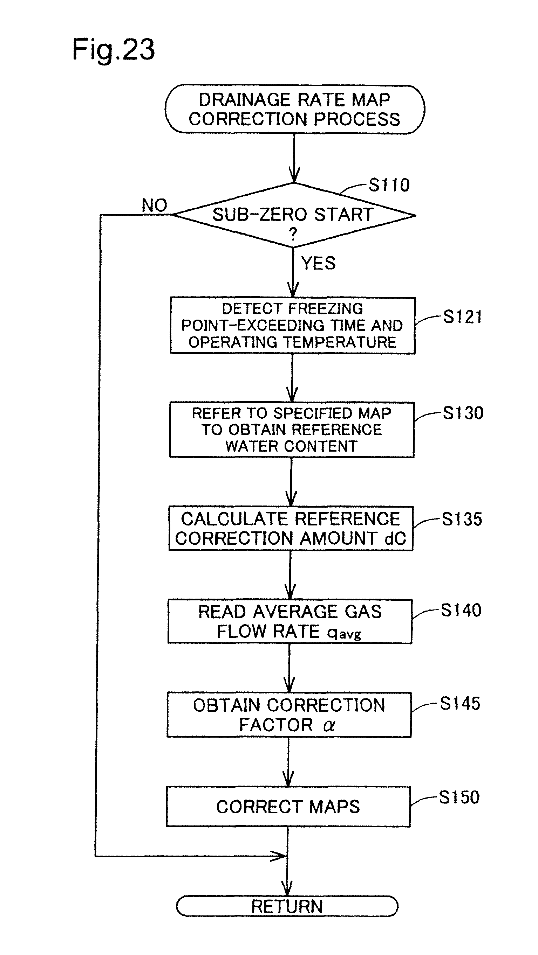

Fig. 23 is a flowchart showing the procedure of correction process of the drainage rate map performed by the water content estimator 21 in a fuel cell system according to a fifth embodiment of the invention. The flow of Fig. 23 is substantially similar to the flow of Fig. 17, except replacement of step S120 with step S121. The configuration of the fuel cell system of the fifth embodiment is similar to that of the fuel cell system of the fourth embodiment (Figs. 2 and 7). The procedure of water content estimation process performed in the fourth embodiment is similar to the procedure described in the third embodiment (Fig. 16).

The higher water content of the fuel cell 10 at the sub-zero start causes a gentler increase in operating temperature of the fuel cell 10. A time elapsed before the operating temperature of the fuel cell 10 becomes higher than the freezing point (hereinafter referred to as "freezing point-exceeding time") is accordingly determined depending on the operating temperature at the start of the fuel cell 10 and the water content of the fuel cell 10.

According to the fifth embodiment, the water content estimator 21 detects the operating temperature at the start of the fuel cell 10 and the freezing point-exceeding time at step S121. At step S130, the water content estimator 21 refers to a specified map showing the relationship of the water content of the fuel cell 10 to the operating temperature at the start of the fuel cell 10 and the freezing point-exceeding time to obtain the reference water content.

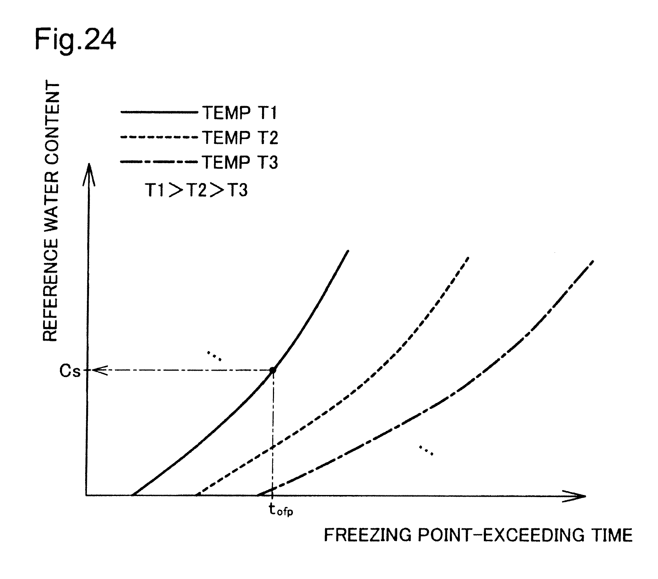

Fig. 24 is a diagram showing one example of the map used to obtain the reference water content at step S130, with the freezing point-exceeding time as the abscissa and the reference water content as the ordinate. This map specifies the relationship of reference water content increasing along a downward-convex curve with an increase in freezing point-exceeding time at each operating temperature on the start of the fuel cell. This map also specifies the relationship of reference water content decreasing with a decrease in operating temperature at the start of the fuel cell under the condition of a fixed freezing point-exceeding time.

Fig. 24 shows only the curves at operating temperatures T1, T2 and T3 (T1> T2> T3) on the start of the fuel cell 10 with omitting the curves at the other operating temperatures. The broken-line arrow in Fig. 24 schematically shows that a reference water content Cs is obtained when the operating temperature of the fuel cell 10 is equal to T1 and the freezing point-exceeding time is equal to $T_{ofp}$.

At step S130, the water content estimator 21 refers to this map to obtain the reference water content. At steps S135 to S150, the water content estimator 21 corrects the drainage limit value $C_{lim}$ and thereby corrects the drainage rate map, in the same manner as described in the fourth embodiment. As described above, the configuration of the fifth embodiment improves the estimation accuracy by the drainage rate-based estimation method of the water content, like the fourth embodiment.

F. Sixth Embodiment

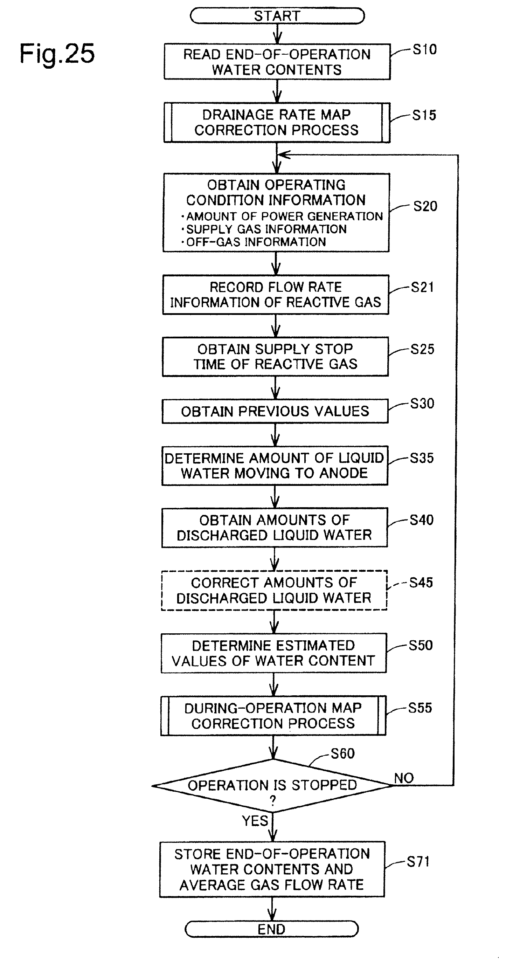

Fig. 25 is a flowchart showing the procedure of water content estimation process performed by the water content estimator 21 in a fuel cell system according to a sixth embodiment of the invention. The flow of Fig. 25 is substantially similar to the flow of Fig. 16, except addition of step S55. The configuration of the fuel cell system of the sixth embodiment is similar to that of the fuel cell system of the fifth embodiment (Figs. 2 and 7).

According to the fourth embodiment and the fifth embodiment described above, the water content estimator 21 performs the correction process of the drainage rate map at the sub-zero start time (step S15). According to the sixth embodiment, on the other hand, the water content estimator 21 performs an additional correction process of the drainage rate map during operation of the fuel cell 10. More specifically, the water content estimator 21 of the sixth embodiment performs a correction process of the drainage rate map for the cathode (step S55) after obtaining the estimated values Cc and Ca of water content of the fuel cell 10 at step S50.

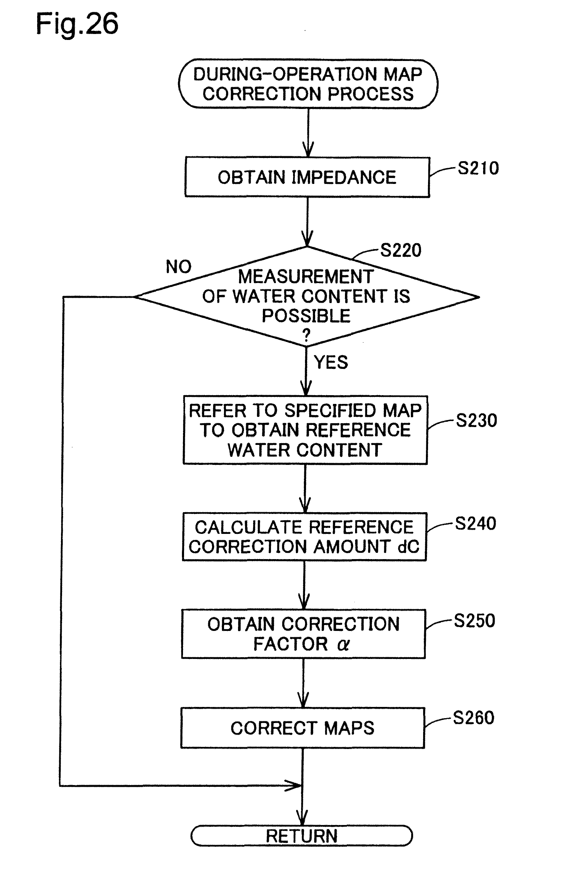

Fig. 26 is a flowchart showing the procedure of correction process of the drainage rate map performed at step S55 (hereinafter referred to as "during-operation map correction process"). At step S210, the water content estimator 21 obtains the measurement result of the impedance meter 93 (Fig. 2). At step S220, the water content estimator 21 determines whether it is possible or difficult to measure the water content of the fuel cell 10 based on a measured impedance Zm.

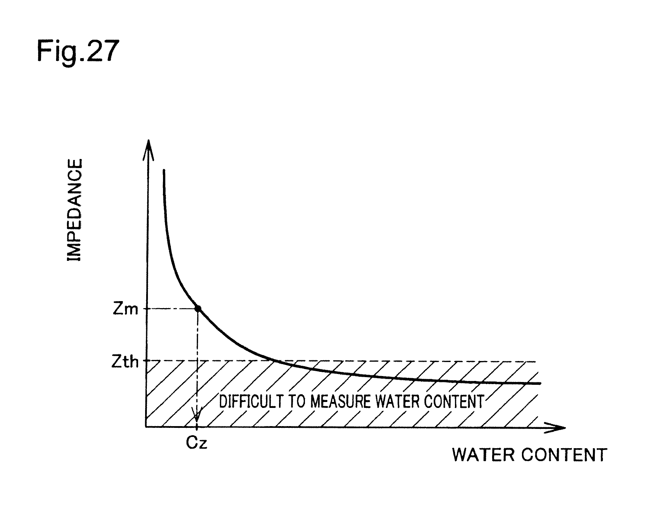

Fig. 27 is a graph showing the relationship between the impedance of the fuel cell and the water content of the fuel cell. As illustrated in this graph, the impedance of the fuel cell decreases exponentially with an increase in water content of the fuel cell. A significantly high water content of the fuel cell accordingly results in a significantly small variation in impedance. Under the relatively wet condition inside the fuel cell, it is thus difficult to measure the water content of the fuel cell based on the impedance.

At step S220, the water content estimator 21 compares a specified impedance threshold Zth with the measured impedance Zm obtained at step S10. When the measured impedance Zm is not lower than the impedance threshold Zth, the water content estimator 21 considers it possible to measure the water content of the fuel cell 10 based on the measured impedance Zm. When the measured impedance Zm is lower than the impedance threshold Zth, on the other hand, the water content estimator 21 considers it difficult to measure the water content of the fuel cell 10 based on the measured impedance Zm and terminates the correction process to return to the water content estimation process (Fig. 25).

The water content estimator 21 stores in advance a map of such relationship as shown in Fig. 27. At step S230, the water content estimator 21 refers to this map to obtain a current water content $C_z$ of the fuel cell at the measured impedance Zm, as the reference water content for correction.

At step S240, the water content estimator 21 calculates the difference between the water content $C_z$ and the current estimated value Cc determined at step S50 in the water content estimation process (Fig. 25) and multiplies the calculated difference by a factor P to calculate a reference correction amount dC (Equation (11) given below). This factor $\beta$ is similar to the factor $\beta$ used in Equation (9) described in the fourth embodiment:

$$\text{Reference Correction Amount } dC = \beta \times (C_z - Cc) \qquad (11)$$

At step S250, the water content estimator 21 refers to a map similar to the map (Fig. 21A) used at step S145 in the correction process (Fig. 17) described in the fourth embodiment, so as to obtain a correction factor $\alpha$, based on the reference correction amount dC and the current flow rate of the supply gas. At step S260, the water content estimator 21 corrects the correction value-obtaining map and the drainage rate map in the same manner as the processing of step S150 in the correction process described in the fourth embodiment.

As described above, the water content estimator 21 of the sixth embodiment additionally corrects the drainage rate map during operation of the fuel cell 10. This configuration enables the water content of the fuel cell 10 to be estimated with higher accuracy.

G. Seventh Embodiment

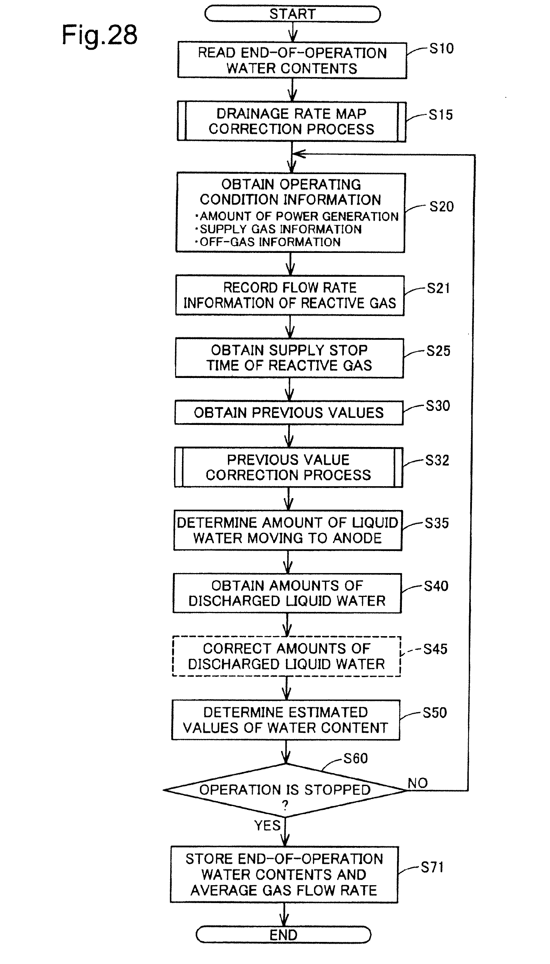

Fig. 28 is a flowchart showing the procedure of water content estimation process performed by the water content estimator 21 in a fuel cell system according to a seventh embodiment of the invention. The flow of Fig. 28 is substantially similar to the flow of Fig. 16, except addition of step S32. The configuration of the fuel cell system of the seventh embodiment is similar to that of the fuel cell system of the fourth embodiment (Figs. 2 and 7).

According to the seventh embodiment, after obtaining the previous values at step S30, the water content estimator 21 corrects the previous values when it is determined that correction of the previous values is required (step S32). The previous values subjected to the correction at step S32 are the previous estimated values of water content on both the cathode side and the anode side. The following describes the specific procedure at step S35.

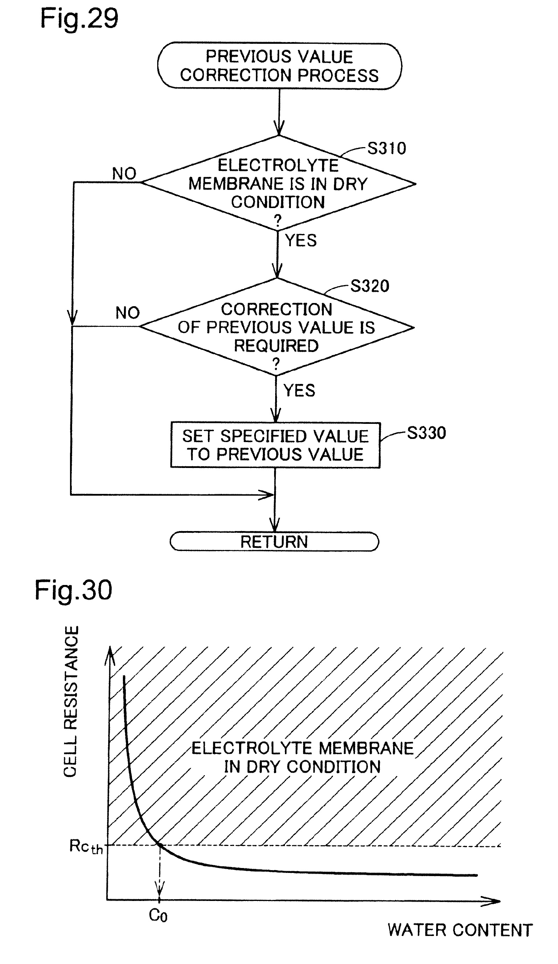

Fig. 29 is a flowchart showing the procedure of previous value correction process performed at step S32 by the water content estimator 21. At step S310, the water content estimator 21 obtains the cell resistance of each of the power generation elements 11 from the measurement result of the impedance meter 93 (Fig. 2) and detects that the electrolyte membrane of the fuel cell 10 is in the dry condition, based on the cell resistance.

Fig. 30 is a diagram showing one example of the relationship between the cell resistance and the water content of the fuel cell. As illustrated in this graph, the cell resistance increases exponentially with a decrease in water content of the fuel cell. The cell resistance significantly increases when the water content of the fuel cell decreases to such a level that the electrolyte membrane of the fuel cell is in the dry condition.

At step S310 (Fig. 29), when the measured cell resistance is higher than a cell resistance threshold $Rc_{th}$ set in advance as the basis, the water content estimator 21 determines that the electrolyte membrane of the fuel cell 10 is in the dry condition and performs the processing of step S320. When the measured cell resistance is not higher than the cell resistance threshold $Rc_{th}$, on the other hand, the water content estimator 21 determines that the electrolyte membrane is not in the dry condition and returns to the water content estimation process (Fig. 28) to resume the processing of and after step S35.

At step S320, the water content estimator 21 compares the previous values on the cathode side and on the anode side with a specified threshold Co and determines whether the previous values are within an allowable range. The specified threshold $C_0$ may be, for example, a certain water content at the cell resistance threshold $Rc_{th}$, based on the relationship between the cell resistance and the water content of the fuel cell as shown in Fig. 30. The allowable range of the previous values may be, for example, a range of $\pm 10\%$ relative to the threshold Co.

When it is determined at step S320 that even one of the previous values on the cathode side and on the anode side is out of the allowable range, the water content estimator 21 sets a specified initial value to the previous value out of the allowable range at step S330. The specified initial value may be, for example, equal to the specified threshold $C_0$ used at step S320. The water content estimator 21 then uses the corrected previous value to resume the processing of and after step S35 in the water content estimation process (Fig. 28). When both the previous values on the cathode side and on the anode side are within the allowable range, on the other hand, the water content estimator 21 resumes the processing of and after step S35 in the water content estimation process without correcting the previous values.

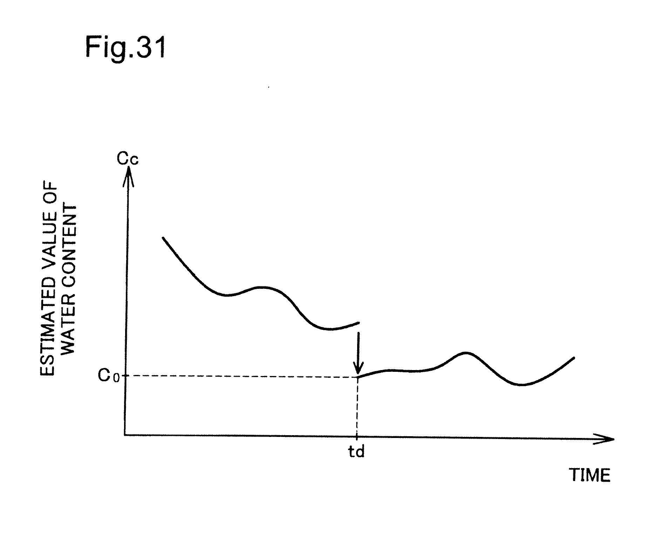

Fig. 31 is a diagram showing one example of time change of the estimated value Cc of water content on the cathode side when the previous value correction process is performed at step S32. As a matter of convenience, the description regarding the estimated value Ca of water content on the anode side is omitted. In this graph, the previous value correction process of step S32 is performed at a time td to change the estimated value Cc of water content to the specified initial value Co. The time change curve of the estimated value Cc of water content is accordingly discontinuous.

As described above, when the electrolyte membrane of the fuel cell 10 is in the dry condition, the water content estimator 21 of the seventh embodiment corrects the previous value on the basis of the previously obtained water content of the fuel cell 10. This configuration avoids continuation of the estimation process using the wrong estimated value of water content to accumulate errors, thereby improving the estimation accuracy of the water content of the fuel cell 10.

H. Modifications

The invention is not limited to the above embodiments but various modifications and variations may be made to the embodiments without departing from the scope of the invention. Some of possible modifications are described below.

H1. Modification 1

According to the above embodiment, the water content estimator 21 refers to the drainage rate map to obtain the amount of liquid water discharged from the fuel cell 10 for the specified duration, and determines the estimated value of water content of the fuel cell 10, based on the operating conditions of the fuel cell 10, such as the amount of discharged liquid water, the amount of produced water, the cathode water vapor balance, the anode water vapor balance, and the amount of liquid water moving to anode. According to another embodiment, the water content estimator 21 may not use the amount of produced water, the cathode water vapor balance, the anode water vapor balance or the amount of liquid water moving to anode to determine the estimated value of water content of the fuel cell 10. The water content estimator 21 may be required to use at least the amount of discharged liquid water obtained by the method described in the above embodiment to determine the estimated value of water content of the fuel cell 10.

H2. Modification 2

In order to obtain the amounts of water vapor contained in the supply gas and the off-gas, the configuration of the above embodiment uses the supply gas information detectors 35 and 57 and the off-gas information detectors 43 and 68 to measure the water vapor partial pressures in the supply gas and in the off-gas. The supply gas information detectors 35 and 57 and the off-gas information detectors 43 and 68 are, however, not limited to measure the water vapor partial pressures. The amount of water vapor contained in the supply gas may be calculated from the water vapor partial pressure of the outside air, whilst the amount of water vapor contained in the off-gas may be calculated on the assumption that the water vapor pressure of the off-gas is saturated water vapor pressure. Similarly, the other measured values in the above embodiment may not necessarily be the values obtained by direct measurement but may be controlled values or values based on predetermined values or specified values, instead.

H3. Modification 3

The procedure of the second embodiment obtains the amount of water moving from the cathode to the anode, based on the water content of the electrolyte membrane and the value associated with the diffusion coefficient of water in the electrolyte membrane, such as the water balance. The amount of water moving from the cathode to the anode may, however, be obtained by another method.

H4. Modification 4

According to the third embodiment, the water content estimator 21 corrects the amounts of discharged liquid water at step S45 when a temporary stop of reactive gas supply is detected. According to another embodiment, the water content estimator 21 may correct the amounts of discharged liquid water at step S45 when a specified flow rate change of supply reactive gas (for example, an abrupt decrease of flow rate) is detected. In this modified application, the amounts of discharged liquid water may be corrected according to a period of time when the flow rate of supply reactive gas has the specified flow rate change.

## H5. Modification 5

According to the fourth embodiment, the water content estimator 21 corrects only the drainage rate map for the cathode. According to another embodiment, the water content estimator 21 may similarly correct a drainage rate map for the anode in the same manner as the correction of the drainage rate map for the cathode.

## H6. Modification 6

The procedure of the fourth embodiment uses the drainage limit value $C_{lim\_avg}$ at the average gas flow rate as the basis for correction in the drainage rate map correction process. A drainage limit value $C_{lim\_avg}$ at a different specified flow rate other than the average gas flow rate may be used as the basis in this correction process. In this modified application, the correction process may be performed preferably by using a drainage limit value $C_{lim\_avg}$ at a specified flow rate corresponding to the previous flow rate of the reactive gas during previous operation of the fuel cell 10.

## H7. Modification 7

According to the fifth embodiment, the water content estimator 21 obtains the reference water content, based on the freezing point-exceeding time from the sub-zero start to the time when the operating temperature of the fuel cell 10 becomes higher than the freezing point. According to another embodiment, the water content estimator 21 may obtain the reference water content, based on another parameter relating to the temperature change of the fuel cell 10, instead of the freezing point-exceeding time. For example, the water content estimator 21 may obtain the reference water content, based on a time elapsed before the operating temperature of the fuel cell 10 has a temperature increase of a specified width.

## H8. Modification 8

The procedures of the fifth embodiment and the sixth embodiment calculate the reference correction amount dC by multiplication by the factor β, in order to absorb the influence of the variation in reference water content. According to another embodiment, the factor β may be omitted from Equations (9) and (11). According to another embodiment, the reference correction amount dC may be lessened by a method other than multiplication by the factor β.

## H9. Modification 9

According to the sixth embodiment, the water content estimator 21 obtains the reference water content, based on the measured impedance of the fuel cell 10. According to another embodiment, the water content estimator 21 may obtain the water content of the fuel cell 10 by another method and use the obtained water content as the reference water content.

## H10. Modification 10

According to the seventh embodiment, the water content estimator 21 detects that the electrolyte membrane is in the dry condition, based on the cell resistance of the fuel cell 10. According to another embodiment, the water content estimator 21 may detect that the electrolyte membrane is in the dry condition by another method. For example, the water content estimator 21 may determine that the electrolyte membrane is in the dry condition when a specified change in I-V characteristics is detected.

## H11. Modification 11

According to the seventh embodiment, the water content estimator 21 sets the specified value to the previous value when the previous value is out of the allowable range (steps S320 and S330 in Fig. 29). According to another embodiment, the water content estimator 21 may directly correct the previous value to a specified value when detecting that the electrolyte membrane is in the dry condition, with omitting the decision of step S320.

## H12. Modification 12

According to the above embodiment, the fuel cell system 100 is mounted on the fuel cell vehicle. The fuel cell system 100 may, however, be mounted on any moving body other than the fuel cell vehicle or may be installed in any construction, such as house or facility, other than the moving bodies.

H13. Modification 13

According to the above embodiment, the controller 20 serves as the water content estimator 21 to determine the estimated value of water content of the fuel cell 10 and control the respective components of the fuel cell system 100 based on the estimated value, thereby controlling the operating conditions of the fuel cell 10. According to another embodiment, the controller 20 may serve to control the respective components of the fuel cell system 100, based on an estimated value of amount of liquid water discharged from the fuel cell 10 obtained at step S40 in the above embodiment. More specifically, the controller 20 may control the timing of opening the drainage valve 66 included in the anode gas circulation/discharge assembly 60, based on the estimated value of amount of liquid water discharged from the fuel cell 10.

According to the above embodiment, the controller 20 may be construed to serve as the liquid water discharged amount estimator that performs the process of determining an estimated value of amount of liquid water discharged from the fuel cell 10 for a specified duration, which includes the steps of:

(a) obtaining a last value indicating the water content of the fuel cell 10 immediately before the specified duration;
(b) obtaining a factor, based on the last value and the current flow rate of the reactive gas supplied to the fuel cell 10; and
(c) multiplying the specified duration by the factor to calculate the estimated value.

**DESCRIPTION OF NUMBERS**

| | |
|---|---|
| 1 | an electrolyte membrane |
| 2 | cathode |
| 3 | anode |
| 3 | cathode |
| 5 | a membrane electrode assembly |
| 7 | a cathode separator |
| 7p | flow path |
| 8 | an anode separator |
| 8p | flow path |
| 10 | a fuel cell |
| 11 | power generating elements |
| 20 | a controller |
| 21 | a water content estimator |
| 30 | a cathode gas supply assembly |
| 31 | a cathode gas piping |
| 32 | an air compressor |
| 33 | an air flow meter |
| 34 | an on-off valve |
| 35 | a supply gas information detector |
| 40 | a cathode gas discharge assembly |
| 41 | a cathode off-gas piping |
| 43 | an off-gas information detector |
| 44 | a pressure-regulating valve |
| 50, 50A | an anode gas supply assembly |
| 51 | an anode gas piping |
| 52 | a hydrogen tank |
| 53 | an on-off valve |
| 54 | a regulator |
| 55 | a hydrogen supply device |
| 56 | an inlet pressure meter |
| 57 | a supply gas information detector |
| 60, 60A | an anode gas circulation/discharge assembly |
| 61 | an anode off-gas piping |
| 62 | a gas-liquid separator |
| 63 | an anode gas circulation piping |
| 64 | a hydrogen circulating pump |

| 65 | an anode drain piping |
| 66 | a drain valve |
| 67 | an outlet pressure meter |
| 68 | an off-gas information detector |
| 70 | a refrigerant supply assembly |
| 71 | a refrigerant piping |
| 71a | an upstream piping |
| 71b | a downstream piping |
| 71c | a bypass piping |
| 72 | a radiator |
| 73 | a three-way valve |
| 75 | a refrigerant circulating pump |
| 76a, 76b | refrigerant temperature meters |
| 81 | a secondary battery |
| 82 | a DC/DC converter |
| 83 | a DC/AC inverter |
| 91 | a cell voltage meter |
| 92 | a current measuring meter |
| 93 | an impedance meter |
| 94 | an SOC detector |
| 100, 100A | a fuel cell system |
| 200 | a motor |
| DCL | a DC line |

**Claims**

1. A method of successively obtaining an estimated value of amount of liquid water in a fuel cell during operation, comprising the steps of:

   (a) obtaining a previous estimated value;
   (b) obtaining a factor, based on the previous estimated value and a value representing a current flow rate of a reactive gas supplied to the fuel cell;
   (c) multiplying a period of obtaining the estimated value by the factor, so as to calculate a value contributing to a variation in amount of liquid water in the fuel cell; and
   (d) determining a current estimated value, based on the value calculated in the step (c).

2. The method according to claim 1, wherein
   the factor is a drainage rate that represents an amount of liquid water discharged from the fuel cell per unit time, and the value contributing to the variation in amount of liquid water in the fuel cell is an estimated drainage amount that represents an amount of liquid water discharged from the fuel cell for a duration between a previous period and a present period.

3. The method according to claim 2, wherein
   the step (b) calculates the drainage rate from the previous estimated value and the value representing the current flow rate of the reactive gas supplied to the fuel cell, based on a specified relationship between amount of liquid water in the fuel cell and flow rate of the reactive gas supplied to the fuel cell, wherein
   the specified relationship is a time change in amount of liquid water in the fuel cell along a downward-convex curve by a different change rate with respect to each flow rate of the reactive gas, and the time change causes the amount of liquid water in the fuel cell to converge to a drainage limit value, which is given as a different specified value with respect to each flow rate of the reactive gas.

4. The method according to either one of claims 2 and 3, wherein
   the step (d) determines the current estimated value based on the estimated drainage amount, an amount of water vapor flowing into the fuel cell, an amount of water vapor flowing out of the fuel cell and an amount of water produced by power generation in the fuel cell.

5. The method according to claim 4, wherein

the fuel cell includes an electrolyte membrane placed between a first electrode and a second electrode, and
the step (d) determines the current estimated value, additionally based on an amount of moving water between the first electrode and the second electrode, wherein
the amount of moving water between the first electrode and the second electrode is determined depending on a value associated with an amount of liquid water contained in the electrolyte membrane.

6. The method according to any one of claims 1 to 5, further comprising the steps of:

  (e) detecting that inside of the fuel cell is in a specified dry condition; and
  (f) when detecting that inside of the fuel cell is in the specified dry condition, discarding the current estimated value determined in the step (d) and setting a predetermined value to the current estimated value.

7. The method according to any one of claims 2 to 6, wherein
the step (c) further comprises the step of:

  (c1) when detecting presence of a time period when a flow rate of the reactive gas is temporarily lowered below a specified level, between the previous period and the present period, correcting the estimated drainage amount according to length of the detected time period.

8. The method according to any one of claims 3 to 7, further comprising the steps of:

  (A) obtaining a reference value of amount of liquid water in the fuel cell; and
  (B) obtaining a correction value depending on a difference between the previous estimated value and the reference value obtained in the step (A), and correcting the specified relationship used in the step (b) with the obtained correction value.

9. The method according to claim 8, wherein
the steps (A) and (B) are performed at a sub-zero start of the fuel cell, and
the step (A) obtains the reference value, based on a state change depending on an amount of water contained in the fuel cell at the start of the fuel cell.

10. The method according to claim 9, wherein
the step (A) obtains the reference value, based on a maximum value of electric current detected during continuation of output of a specified voltage from the fuel cell since the start of the fuel cell.

11. The method according to claim 9, wherein
the step (A) obtains the reference value, based on a time elapsed before operating temperature of the fuel cell has a specified temperature change since the start of the fuel cell.

12. The method according to any one of claims 9 to 11, wherein
the step (B) specifies the drainage limit value obtained with respect to a previous flow rate of the reactive gas during a previous operation period of the fuel cell, as a basis for correction, and corrects the overall specified relationship with the correction value.

13. The method according to any one of claims 8 to 12, wherein
the step (B) sets the correction value to be smaller than the difference between the previous estimated value and the reference value, so as to gradually eliminate an error of the estimated value by repeating correction a plurality of times.

14. A method of obtaining an estimated value of amount of liquid water discharged from a fuel cell during operation for a specified duration, comprising the steps of:

  (a) obtaining a last value that indicates an amount of liquid water existing in the fuel cell in a period immediately before the specified duration;
  (b) obtaining a factor, based on the last value and a value representing a current flow rate of a reactive gas in the fuel cell; and
  (c) multiplying the specified duration by the factor, so as to determine the estimated value.

**15.** An estimation apparatus of successively obtaining an estimated value of amount of liquid water in a fuel cell during operation, comprising:

a previous value storage configured to store a previous estimated value;
a gas flow rate acquirer configured to obtain a gas flow rate, which is a value representing a current flow rate of a reactive gas in the fuel cell; and
an estimated value determiner configured to: obtain a factor, based on the previous estimated value stored in the previous value storage and the gas flow rate obtained by the gas flow rate acquirer; multiply a period of obtaining the estimated value by the factor, so as to calculate a variation contribution value contributing to a variation in amount of liquid water in the fuel cell; and determine a current estimated value, based on the variation contribution value.

**16.** A fuel cell system, comprising:

a fuel cell;
a reactive gas supplier configured to supply a reactive gas to the fuel cell;
a liquid water amount acquirer configured to successively obtain an estimated value of amount of liquid water in the fuel cell during operation; and
a controller configured to control operating condition of the fuel cell by using the estimated value of amount of liquid water obtained by the liquid water amount acquirer, wherein
the liquid water amount acquirer obtains a factor, based on a previous estimated value and a value representing a current flow rate of the reactive gas supplied to the fuel cell; multiplies a period of obtaining the estimated value by the factor, so as to calculate a value contributing to a variation in amount of liquid water in the fuel cell; and determines and outputs a current estimated value, based on the value contributing to the variation in amount of liquid water in the fuel cell.

Fig.1

OUTPUT DEMAND

100

CONTROLLER 20

21

WATER CONTENT ESTIMATOR

70

72

71a

71

71b

73

76a

71c

75

76b

50

54

53

52

HYDROGEN TANK

55

56 51

64

63

67

62

60

GAS-LIQUID SEPARATOR

66

65

61

10

FUEL CELL

11

35

SUPPLY GAS INFORMATION DETECTOR

34

33

32

31

30

OUTSIDE AIR

43

OFF-GAS INFORMATION DETECTOR

44

40

41

Fig.2

# Fig.3

VARIATION IN WATER CONTENT ON CATHODE SIDE
$$\Delta Cc = \Delta Cg - \Delta Cvc - \Delta Clc$$

$\Delta Cg$ : AMOUNT OF PRODUCED WATER

$\Delta Cvc_{in}$ : AMOUNT OF WATER VAPOR ON INLET SIDE

$\Delta Cvc_{out}$ : AMOUNT OF WATER VAPOR ON OUTLET SIDE

$\Delta Cvc$ : WATER VAPOR BALANCE
$(\Delta Cvc = \Delta Cvc_{out} - \Delta Cvc_{in})$

$\Delta Clc$ : AMOUNT OF DISCHARGED LIQUID WATER

EP 2 793 304 A1

# Fig.4

```
        ┌──────────────┐
        │    START     │
        └──────────────┘
               │
               ▼
    ┌────────────────────────┐
    │ READ END-OF-OPERATION  │──S10
    │     WATER CONTENT      │
    └────────────────────────┘
               │
               ▼
    ┌────────────────────────┐
    │  OBTAIN OPERATING      │
    │  CONDITION INFORMATION │──S20
    │ ·AMOUNT OF POWER GENERATION
    │ ·SUPPLY GAS INFORMATION│
    │ ·OFF-GAS INFORMATION   │
    └────────────────────────┘
               │
               ▼
    ┌────────────────────────┐
    │  OBTAIN PREVIOUS VALUE │──S30
    └────────────────────────┘
               │
               ▼
    ┌────────────────────────┐
    │   OBTAIN AMOUNT OF     │──S40
    │ DISCHARGED LIQUID WATER│
    └────────────────────────┘
               │
               ▼
    ┌────────────────────────┐
    │  DETERMINE ESTIMATED   │──S50
    │  VALUE OF WATER CONTENT│
    └────────────────────────┘
               │
               ▼
          ◇ S60
    OPERATION IS STOPPED ? ──NO──┐
               │ YES             │
               ▼                 │(loop to S20)
    ┌────────────────────────┐
    │ STORE END-OF-OPERATION │──S70
    │     WATER CONTENT      │
    └────────────────────────┘
               │
               ▼
        ┌──────────────┐
        │     END      │
        └──────────────┘
```

31

EP 2 793 304 A1

Fig.5

Fig.6

$$y = \frac{(C_{lim} - C_{max})\, b}{x-b} + C_{lim}$$

$$y' = \frac{(C_{max} - C_{lim})\, b}{(x-b)^2}$$

Fig.7

OUTPUT DEMAND

CONTROLLER  20
WATER CONTENT ESTIMATOR  21

100A

70
71  72
71b  71a
71c
75  73
76a
76b

50A

30
OUTSIDE AIR
33  32  34
31
SUPPLY GAS INFORMATION DETECTOR  35

SUPPLY GAS INFORMATION DETECTOR  57
51  55  54  53
HYDROGEN TANK  52
64

41  44  43
OFF-GAS INFORMATION DETECTOR
40

FUEL CELL
11  10

63

OFF-GAS INFORMATION DETECTOR  68
61

GAS-LIQUID SEPARATOR  62
60A

66
65

EP 2 793 304 A1

34

# Fig.8

WATER CONTENT Cc ON CATHODE SIDE

$\Delta Cvc_{in}$
$\Delta Cvc_{out}$
$\Delta Clc$
$\Delta Cg$
$\Delta Ct$
$\Delta Cva_{out}$
$\Delta Cla$
$\Delta Cva_{in}$

WATER CONTENT Ca ON ANODE SIDE

| VARIATION IN WATER CONTENT ON CATHODE SIDE $\Delta Cc = \Delta Cg - \Delta Cvc - \Delta Clc - \Delta Ct$ | VARIATION IN WATER CONTENT ON ANODE SIDE $\Delta Ca = \Delta Ct - \Delta Cva - \Delta Cla$ |
|---|---|
| $\Delta Cg$ : AMOUNT OF PRODUCED WATER | $\Delta Ct$ : AMOUNT OF LIQUID WATER MOVING TO ANODE |
| $\Delta Cvc_{in}$ : AMOUNT OF WATER VAPOR ON INLET SIDE | $\Delta Cva_{in}$ : AMOUNT OF WATER VAPOR ON INLET SIDE |
| $\Delta Cvc_{out}$ : AMOUNT OF WATER VAPOR ON OUTLET SIDE | $\Delta Cva_{out}$ : AMOUNT OF WATER VAPOR ON OUTLET SIDE |
| $\Delta Cvc$ : WATER VAPOR BALANCE ($\Delta Cvc = \Delta Cvc_{out} - \Delta Cvc_{in}$) | $\Delta Cva$ : WATER VAPOR BALANCE ($\Delta Cva = \Delta Cva_{out} - \Delta Cva_{in}$) |
| $\Delta Clc$ : AMOUNT OF DISCHARGED LIQUID WATER | $\Delta Cla$ : AMOUNT OF DISCHARGED LIQUID WATER |
| $\Delta Ct$ : AMOUNT OF LIQUID WATER MOVING TO ANODE | |

EP 2 793 304 A1

# Fig.9

```
                    ┌──────────────────┐
                    │      START       │
                    └────────┬─────────┘
                             │
                ┌────────────▼───────────────┐
                │  READ END-OF-OPERATION      │─── S10
                │      WATER CONTENTS         │
                └────────────┬───────────────┘
                             │
                             ◄──────────────────────┐
                ┌────────────▼───────────────┐      │
                │    OBTAIN OPERATING         │      │
                │  CONDITION INFORMATION      │      │
                │ ·AMOUNT OF POWER GENERATION │── S20│
                │ ·SUPPLY GAS INFORMATION     │      │
                │ ·OFF-GAS INFORMATION        │      │
                └────────────┬───────────────┘      │
                             │                       │
                ┌────────────▼───────────────┐      │
                │   OBTAIN PREVIOUS VALUES    │── S30 │
                └────────────┬───────────────┘      │
                             │                       │
                ┌────────────▼───────────────┐      │
                │ DETERMINE AMOUNT OF LIQUID  │── S35 │
                │   WATER MOVING TO ANODE     │      │
                └────────────┬───────────────┘      │
                             │                       │
                ┌────────────▼───────────────┐      │
                │    OBTAIN AMOUNTS OF        │── S40 │
                │  DISCHARGED LIQUID WATER    │      │
                └────────────┬───────────────┘      │
                             │                       │
                ┌────────────▼───────────────┐      │
                │   DETERMINE ESTIMATED       │── S50 │
                │  VALUES OF WATER CONTENT    │      │
                └────────────┬───────────────┘      │
                             │        ┌─ S60         │
                        ┌────▼────────────┐   NO     │
                        ◄  OPERATION IS STOPPED ─────┘
                         ╲       ?       ╱
                          ╲─────┬───────╱
                             YES│
                ┌────────────▼───────────────┐
                │  STORE END-OF-OPERATION     │── S70
                │      WATER CONTENTS         │
                └────────────┬───────────────┘
                             │
                    ┌────────▼─────────┐
                    │       END        │
                    └──────────────────┘
```

Fig.10

DIFFUSION COEFFICIENT OF WATER

Dm

WATER CONTENT PERCENTAGE
OF ELECTROLYTE MEMBRANE

Fig.11

ANODE DRAINAGE RATIO

ADR

DRY TENDENCY OF
ELECTROLYTE MEMBRANE

WET TENDENCY OF
ELECTROLYTE MEMBRANE

Wb  0

WATER BALANCE

ANODE DRAINAGE RATIO   ADR $= \Delta Ct \diagup \Delta Cg$

Fig.12

# Fig.13

```
                    ┌──────────────────┐
                    │      START       │
                    └──────────────────┘
                             │
                             ▼
              ┌──────────────────────────────┐
              │  READ END-OF-OPERATION       │──S10
              │      WATER CONTENTS          │
              └──────────────────────────────┘
                             │
                             ▼ ◄──────────────────────────┐
              ┌──────────────────────────────┐            │
              │   OBTAIN OPERATING           │            │
              │   CONDITION INFORMATION      │            │
              │ ·AMOUNT OF POWER GENERATION  │──S20       │
              │ ·SUPPLY GAS INFORMATION      │            │
              │ ·OFF-GAS INFORMATION         │            │
              └──────────────────────────────┘            │
                             │                            │
                             ▼                            │
              ┌──────────────────────────────┐            │
              │   OBTAIN SUPPLY STOP         │──S25       │
              │   TIME OF REACTIVE GAS       │            │
              └──────────────────────────────┘            │
                             │                            │
                             ▼                            │
              ┌──────────────────────────────┐            │
              │   OBTAIN PREVIOUS VALUES     │──S30       │
              └──────────────────────────────┘            │
                             │                            │
                             ▼                            │
              ┌──────────────────────────────┐            │
              │ DETERMINE AMOUNT OF LIQUID   │──S35       │
              │ WATER MOVING TO ANODE        │            │
              └──────────────────────────────┘            │
                             │                            │
                             ▼                            │
              ┌──────────────────────────────┐            │
              │   OBTAIN AMOUNTS OF          │──S40       │
              │   DISCHARGED LIQUID WATER    │            │
              └──────────────────────────────┘            │
                             │                            │
                             ▼                            │
              ┌ ─ ─ ─ ─ ─ ─ ─ ─ ─ ─ ─ ─ ─ ─ ┐            │
              │   CORRECT AMOUNTS OF         │--S45       │
              │   DISCHARGED LIQUID WATER    │            │
              └ ─ ─ ─ ─ ─ ─ ─ ─ ─ ─ ─ ─ ─ ─ ┘            │
                             │                            │
                             ▼                            │
              ┌──────────────────────────────┐            │
              │   DETERMINE ESTIMATED        │──S50       │
              │   VALUES OF WATER CONTENT    │            │
              └──────────────────────────────┘            │
                             │                            │
                             ▼        ┌─S60               │
                        ╱────────────────╲       NO       │
                       ╱  OPERATION IS     ╲──────────────┘
                       ╲  STOPPED ?        ╱
                        ╲────────────────╱
                             │ YES
                             ▼
              ┌──────────────────────────────┐
              │   STORE END-OF-OPERATION     │──S70
              │   WATER CONTENTS             │
              └──────────────────────────────┘
                             │
                             ▼
                    ┌──────────────────┐
                    │       END        │
                    └──────────────────┘
```

Fig.14A

Fig.14B

Fig.15

Fig.16

```
                  ┌──────────────────┐
                  │      START       │
                  └────────┬─────────┘
                           ↓
         ┌──────────────────────────────┐
         │  READ END-OF-OPERATION       │───S10
         │  WATER CONTENTS              │
         └───────────────┬──────────────┘
                         ↓
        ┌────────────────────────────────┐
        │║  DRAINAGE RATE MAP           │───S15
        │║  CORRECTION PROCESS          │
        └────────────────┬───────────────┘
                         ↓ ←──────────────────────┐
        ┌────────────────────────────────┐         │
        │  OBTAIN OPERATING              │         │
        │  CONDITION INFORMATION         │         │
        │ ·AMOUNT OF POWER GENERATION    │───S20    │
        │ ·SUPPLY GAS INFORMATION        │         │
        │ ·OFF-GAS INFORMATION           │         │
        └────────────────┬───────────────┘         │
                         ↓                          │
        ┌────────────────────────────────┐         │
        │  RECORD FLOW RATE              │───S21    │
        │  INFORMATION OF REACTIVE GAS   │         │
        └────────────────┬───────────────┘         │
                         ↓                          │
        ┌────────────────────────────────┐         │
        │  OBTAIN SUPPLY STOP           │───S25    │
        │  TIME OF REACTIVE GAS         │         │
        └────────────────┬───────────────┘         │
                         ↓                          │
        ┌────────────────────────────────┐         │
        │  OBTAIN PREVIOUS VALUES       │───S30    │
        └────────────────┬───────────────┘         │
                         ↓                          │
        ┌────────────────────────────────┐         │
        │ DETERMINE AMOUNT OF LIQUID    │───S35    │
        │ WATER MOVING TO ANODE         │         │
        └────────────────┬───────────────┘         │
                         ↓                          │
        ┌────────────────────────────────┐         │
        │  OBTAIN AMOUNTS OF            │───S40    │
        │  DISCHARGED LIQUID WATER      │         │
        └────────────────┬───────────────┘         │
                         ↓                          │
        ┌ ─ ─ ─ ─ ─ ─ ─ ─┼─ ─ ─ ─ ─ ─ ─ ┐         │
          CORRECT AMOUNTS OF             ┆───S45    │
        ┆ DISCHARGED LIQUID WATER        │         │
        └ ─ ─ ─ ─ ─ ─ ─ ─┼─ ─ ─ ─ ─ ─ ─ ┘         │
                         ↓                          │
        ┌────────────────────────────────┐         │
        │  DETERMINE ESTIMATED          │───S50    │
        │  VALUES OF WATER CONTENT      │         │
        └────────────────┬───────────────┘         │
                         ↓        ┌─S60             │
                    ◇─────────────────────◇  NO     │
                    ╱ OPERATION IS STOPPED ╲────────┘
                    ╲          ?           ╱
                     ◇───────────────────◇
                         │ YES
                         ↓
        ┌────────────────────────────────┐
        │  STORE END-OF-OPERATION       │───S71
        │  WATER CONTENTS AND           │
        │  AVERAGE GAS FLOW RATE        │
        └────────────────┬───────────────┘
                         ↓
                  ┌──────────────────┐
                  │       END        │
                  └──────────────────┘
```

Fig.17

```
           ┌──────────────────────────┐
           │    DRAINAGE RATE MAP     │
           │    CORRECTION PROCESS    │
           └──────────────────────────┘
                        │
                        ▼
         NO         ◇──────────◇  ─S110
      ◄─────────────  SUB-ZERO START
                      ?
                    ◇──────────◇
                        │ YES
                        ▼
           ┌──────────────────────────┐
           │   DETECT START-TIME PEAK │ ─S120
           │  CURRENT AND OPERATING   │
           │       TEMPERATURE        │
           └──────────────────────────┘
                        │
                        ▼
           ┌──────────────────────────┐
           │  REFER TO SPECIFIED MAP  │ ─S130
           │   TO OBTAIN REFERENCE    │
           │      WATER CONTENT       │
           └──────────────────────────┘
                        │
                        ▼
           ┌──────────────────────────┐
           │  CALCULATE REFERENCE     │ ─S135
           │ CORRECTION AMOUNT dC     │
           └──────────────────────────┘
                        │
                        ▼
           ┌──────────────────────────┐
           │    READ AVERAGE GAS      │ ─S140
           │    FLOW RATE q_avg       │
           └──────────────────────────┘
                        │
                        ▼
           ┌──────────────────────────┐
           │   OBTAIN CORRECTION      │ ─S145
           │      FACTOR α            │
           └──────────────────────────┘
                        │
                        ▼
           ┌──────────────────────────┐
           │     CORRECT MAPS         │ ─S150
           └──────────────────────────┘
                        │
                        ▼
           ┌──────────────────────────┐
           │        RETURN            │
           └──────────────────────────┘
```

## Fig.18

EP 2 793 304 A1

Fig.19A

Fig.19B

45

# Fig.20

## Fig.21A

## Fig.21B

Fig.22

INPUT VALUE OF REFERENCE WATER CONTENT

NUMBER OF TIMES PERFORMED

ESTIMATED VALUE OF WATER CONTENT

ct
CONVERGENT
TIME

NUMBER OF TIMES PERFORMED

# Fig.23

DRAINAGE RATE MAP
CORRECTION PROCESS

S110
NO ← SUB-ZERO START ?

YES

DETECT FREEZING
POINT-EXCEEDING TIME AND — S121
OPERATING TEMPERATURE

REFER TO SPECIFIED MAP
TO OBTAIN REFERENCE — S130
WATER CONTENT

CALCULATE REFERENCE — S135
CORRECTION AMOUNT dC

READ AVERAGE GAS — S140
FLOW RATE $q_{avg}$

OBTAIN CORRECTION — S145
FACTOR $\alpha$

CORRECT MAPS — S150

RETURN

## Fig.24

Fig.25

```
                        ┌──────────  START  ──────────┐

                    ┌─────────────────────────────┐
                    │  READ END-OF-OPERATION      │──S10
                    │  WATER CONTENTS             │
                    └─────────────────────────────┘

                    ┌─────────────────────────────┐
                    │  DRAINAGE RATE MAP          │──S15
                    │  CORRECTION PROCESS         │
                    └─────────────────────────────┘

                    ┌─────────────────────────────┐
                    │  OBTAIN OPERATING           │
                    │  CONDITION INFORMATION      │──S20
                    │  ·AMOUNT OF POWER GENERATION│
                    │  ·SUPPLY GAS INFORMATION    │
                    │  ·OFF-GAS INFORMATION       │
                    └─────────────────────────────┘

                    ┌─────────────────────────────┐
                    │  RECORD FLOW RATE           │──S21
                    │  INFORMATION OF REACTIVE GAS│
                    └─────────────────────────────┘

                    ┌─────────────────────────────┐
                    │  OBTAIN SUPPLY STOP         │──S25
                    │  TIME OF REACTIVE GAS       │
                    └─────────────────────────────┘

                    ┌─────────────────────────────┐
                    │  OBTAIN PREVIOUS VALUES     │──S30
                    └─────────────────────────────┘

                    ┌─────────────────────────────┐
                    │ DETERMINE AMOUNT OF LIQUID  │──S35
                    │ WATER MOVING TO ANODE       │
                    └─────────────────────────────┘

                    ┌─────────────────────────────┐
                    │  OBTAIN AMOUNTS OF          │──S40
                    │  DISCHARGED LIQUID WATER    │
                    └─────────────────────────────┘

                    ┌─ ─ ─ ─ ─ ─ ─ ─ ─ ─ ─ ─ ─ ─ ─┐
                    │  CORRECT AMOUNTS OF         │──S45
                    │  DISCHARGED LIQUID WATER    │
                    └─ ─ ─ ─ ─ ─ ─ ─ ─ ─ ─ ─ ─ ─ ─┘

                    ┌─────────────────────────────┐
                    │  DETERMINE ESTIMATED        │──S50
                    │  VALUES OF WATER CONTENT    │
                    └─────────────────────────────┘

                    ┌─────────────────────────────┐
                    │  DURING-OPERATION MAP       │──S55
                    │  CORRECTION PROCESS         │
                    └─────────────────────────────┘

                         ╱────── S60 ──────╲          NO
                        ╱  OPERATION IS STOPPED ╲──────────
                        ╲         ?           ╱
                         ╲───────────────────╱
                                 │ YES

                    ┌─────────────────────────────┐
                    │  STORE END-OF-OPERATION     │──S71
                    │  WATER CONTENTS AND         │
                    │  AVERAGE GAS FLOW RATE      │
                    └─────────────────────────────┘

                        ┌──────────  END  ──────────┐
```

# Fig.26

```
┌─────────────────────────────┐
│   DURING-OPERATION MAP      │
│   CORRECTION PROCESS        │
└─────────────────────────────┘
              │
              ▼
┌─────────────────────────────┐
│      OBTAIN IMPEDANCE       │──── S210
└─────────────────────────────┘
              │
              ▼
       ╱─────────────╲
NO    ╱  MEASUREMENT   ╲ ──── S220
◄────╱ OF WATER CONTENT IS╲
      ╲    POSSIBLE      ╱
       ╲       ?        ╱
        ╲─────────────╱
              │ YES
              ▼
┌─────────────────────────────┐
│  REFER TO SPECIFIED MAP     │
│  TO OBTAIN REFERENCE        │──── S230
│  WATER CONTENT              │
└─────────────────────────────┘
              │
              ▼
┌─────────────────────────────┐
│  CALCULATE REFERENCE        │──── S240
│  CORRECTION AMOUNT dC       │
└─────────────────────────────┘
              │
              ▼
┌─────────────────────────────┐
│  OBTAIN CORRECTION          │──── S250
│  FACTOR α                   │
└─────────────────────────────┘
              │
              ▼
┌─────────────────────────────┐
│      CORRECT MAPS           │──── S260
└─────────────────────────────┘
              │
              ▼
       ┌─────────────┐
       │   RETURN    │
       └─────────────┘
```

# Fig.27

Fig.28

START

READ END-OF-OPERATION WATER CONTENTS — S10

DRAINAGE RATE MAP CORRECTION PROCESS — S15

OBTAIN OPERATING CONDITION INFORMATION
·AMOUNT OF POWER GENERATION
·SUPPLY GAS INFORMATION
·OFF-GAS INFORMATION — S20

RECORD FLOW RATE INFORMATION OF REACTIVE GAS — S21

OBTAIN SUPPLY STOP TIME OF REACTIVE GAS — S25

OBTAIN PREVIOUS VALUES — S30

PREVIOUS VALUE CORRECTION PROCESS — S32

DETERMINE AMOUNT OF LIQUID WATER MOVING TO ANODE — S35

OBTAIN AMOUNTS OF DISCHARGED LIQUID WATER — S40

CORRECT AMOUNTS OF DISCHARGED LIQUID WATER — S45

DETERMINE ESTIMATED VALUES OF WATER CONTENT — S50

OPERATION IS STOPPED ? — S60    NO

YES

STORE END-OF-OPERATION WATER CONTENTS AND AVERAGE GAS FLOW RATE — S71

END

54

Fig.29

PREVIOUS VALUE
CORRECTION PROCESS

ELECTROLYTE
MEMBRANE IS IN DRY
CONDITION
? — S310

NO

YES

CORRECTION
OF PREVIOUS VALUE IS
REQUIRED
? — S320

NO

YES

SET SPECIFIED VALUE
TO PREVIOUS VALUE — S330

RETURN

Fig.30

CELL RESISTANCE

ELECTROLYTE MEMBRANE
IN DRY CONDITION

Rcth

C0

WATER CONTENT

# Fig.31

## INTERNATIONAL SEARCH REPORT

| International application No. |
|---|
| PCT/JP2011/006917 |

### A. CLASSIFICATION OF SUBJECT MATTER
*H01M8/04(2006.01)i*

According to International Patent Classification (IPC) or to both national classification and IPC

### B. FIELDS SEARCHED

Minimum documentation searched (classification system followed by classification symbols)
H01M8/04

Documentation searched other than minimum documentation to the extent that such documents are included in the fields searched
Jitsuyo Shinan Koho          1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2008-130308 A  (Denso Corp.),<br>05 June 2008 (05.06.2008),<br>entire text; all drawings<br>(Family: none) | 1-7,14-16 |
| Y | JP 2007-134287 A  (Yokogawa Electric Corp.),<br>31 May 2007 (31.05.2007),<br>entire text; all drawings<br>(Family: none) | 1-7,14-16 |
| Y | JP 2009-211940 A  (Toyota Motor Corp.),<br>17 September 2009 (17.09.2009),<br>paragraphs [0051], [0052], [0064], [0065]<br>(Family: none) | 1-7,14-16 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 February, 2012 (03.02.12) | 14 February, 2012 (14.02.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/006917

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-52937 A  (Toyota Motor Corp.),<br>01 March 2007 (01.03.2007),<br>entire text; all drawings<br>(Family: none) | 1-16 |
| A | JP 2009-48816 A  (Nissan Motor Co., Ltd.),<br>05 March 2009 (05.03.2009),<br>paragraph [0091]<br>(Family: none) | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007052936 A

- JP 2010257606 A